# EUROPEAN PATENT SPECIFICATION

(11) **EP 4 014 525 B1**
(45) Date of publication and mention of the grant of the patent: **06.11.2024**
(21) Application number: 20872265.2
(22) Date of filing: 16.09.2020
(51) Int. Cl.: B64C 39/02, H04W 48/04, H04W 12/06, G08G 5/00, H04W 60/00

(54) **MOBILITY MANAGEMENT OF UNMANNED AERIAL VEHICLE**
MOBILITÄTSVERWALTUNG EINES UNBEMANNTEN LUFTFAHRZEUGS
GESTION DE LA MOBILITÉ D'UN VÉHICULE AÉRIEN SANS PILOTE

(30) Priority: 02.10.2019 KR 20190122339; 02.10.2019 KR 20190122379
(43) Date of publication of application: 22.06.2022
(73) Proprietor: Samsung Electronics Co., Ltd., Suwon-si, Gyeonggi-do 16677 (KR)
(72) Inventor: HAN, Yoonseon, Suwon-si, Gyeonggi-do 16677 (KR); PARK, Jungshin, Suwon-si, Gyeonggi-do 16677 (KR); JEONG, Sangsoo, Suwon-si, Gyeonggi-do 16677 (KR); MOON, Sangjun, Suwon-si, Gyeonggi-do 16677 (KR); SON, Jungje, Suwon-si, Gyeonggi-do 16677 (KR)
(74) Representative: Gulde & Partner
(86) International application number: PCT/KR2020/012498
(87) International publication number: WO 2021/066355

(56) References cited:
- WO-A1-2016/125161
- WO-A1-2018/189576
- WO-A1-2018/189576
- US-A1- 2016 300 493
- US-A1- 2017 076 610
- US-A1- 2018 324 580
- US-B2- 8 675 663
- US-B2- 9 412 279
- "3rd Generation Partnership Project; Technical Specification Group Services and System Aspects; Unmanned Aerial System (UAS) support in 3GPP; Stage 1; Release 16", 3GPP STANDARD; TECHNICAL SPECIFICATION; 3GPP TS 22.125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.3.0, 27 September 2019 (2019-09-27), Mobile Competence Centre ; 650, route des Lucioles ; F-06921 Sophia-Antipolis Cedex ; France, pages 1 - 10, XP051784922

## Description

### [Technical Field]

The disclosure relates to a wireless communication system. More particularly, the disclosure relates to an apparatus and method for controlling the movement route of an unmanned aerial vehicle (UAV) through information exchange among the UAV, a UAV controller, and an unmanned aerial vehicle traffic management system (UTM) that controls an unmanned aerial system (UAS) in a mobile communication system.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

The above information is presented as background information only to assist with an understanding of the disclosure. No determination has been made, and no assertion is made, as to whether any of the above might be applicable as prior art with regard to the disclosure.

The following publications are related to unmanned aerial system (UAS) service in a wireless communication system:
- WO 2018/189576 A1 "OPTIMAL UNMANNED AERIAL VEHICLE FLIGHT ROUTE PLANNING BASED ON QUALITY-OF-SERVICE - REQUIREMENTS FOR DATA, TELEMETRY, AND COMMAND AND CONTROL REQUIREMENTS IN 3GPP NETWORKS"; and
- US 2018/324580 A1 "EXCHANGING A MESSAGE INCLUDING DRONE-COUPLED CAPABILITY INFORMATION BETWEEN A DRONE-COUPLED USER EQUIPMENT AND A COMPONENT OF A TERRESTRIAL WIRELESS COMMUNICATION SUBSCRIBER NETWORK".

### [Disclosure of Invention]

### [Technical Problem]

On the other hand, there is an unmanned aerial vehicle (UAV) as a form of terminal that is expected to receive services using a mobile communication network in the near future. Currently, in operating a drone, a method of using a cellular network represented by mobile communication is not supported. As most current operation methods, a method of operating a drone and a drone controller using a protocol provided by a manufacturer through a short-range wireless communication network such as RF, Bluetooth, and Wi-Fi is generally used. Therefore, in order to control the UAV using a mobile communication network, it is necessary to study problems that do not occur in the existing local area network and problems related to the mobility of drones, and make improvements.

### [Solution to Problem]

Aspects of the disclosure are to address at least the above-mentioned problems and/or disadvantages and to provide at least the advantages described below. Accordingly, an aspect of the disclosure is to provide a method and an apparatus supporting the operation of an unmanned aerial system (UAS) through a mobile communication system as defined in the appended claims.

The technical subjects pursued in the disclosure may not be limited to the above mentioned technical subjects, and other technical subjects which are not mentioned may be clearly understood, through the following descriptions, by those skilled in the art to which the disclosure pertains.

Additional aspects will be set forth in part in the description which follows and, in part, will be apparent from the description, or may be learned by practice of the presented embodiments.

### [Advantageous Effects of Invention]

Currently, the number of UEs using a mobile communication network and the number of services and applications to support this are increasing exponentially. In addition, in order to improve the quality of the mobile communication network, the design and operation of a wireless network and a core network are becoming increasingly sophisticated. In this situation, not only UEs that simply use voice calls and data services, but also new types of UEs such as factories, unmanned aerial vehicles, robots, automobiles, and airplanes are emerging. These new types of UEs are expected to continue to increase, and the mobile communication network is also expected to continue to evolve in service to effectively support their purposes.

While the purposes and types of various UEs are changing, the mobile communication network currently shares radio resources with all UEs, and the core network is generally operated in a form shared by all UEs. Since each UE has a different type and purpose, there is a difference in interaction with the network according to the operated type and the used service. Therefore, in order to effectively support each type of UE, the mobile communication network must maintain an optimized configuration by analyzing the purpose and service requirements of each UE. In addition, in order to effectively support each UE and services, it is necessary to identify the characteristics of each UE and to configure the UE so that other UEs and services are not affected through optimization and automation of configuration and management.

An objective of the disclosure is to support a new type of mobile communication UE called an unmanned aerial vehicle, not a type of UE used on the ground represented by an existing smartphone. In the current situation, UAVs have different operational purposes and routes according to time, and the UAVs may become uncontrollable due to unnecessary exchange of control signals or communication quality degradation which may occur when the UAVs are operated and configured in the same form as existing ground-based smartphones, or because, in some cases, the UAVs fall into a state of inability to communicate while performing a mission. In order to solve these problems, various embodiments can minimize control signals within a route supported by a network service when a UAV initially establishes a route and exchanges control signals with a mobile communication network, and can support continuous communication.

In addition, according to the disclosure, by providing information on areas that may affect other UEs in the network or areas where a UAV should avoid its operation, such as densely populated areas, and by providing area-specific and time-specific predicted values for the network configuration and quality information that changes in real time, it is possible to support the safe operation of the UAV. In addition, it is possible to prevent problems in which quality deterioration or service failure occurs when users use the network due to the indiscriminate operation of the UAV.

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with the accompanying drawings, in which:
FIG. 1 illustrates the configuration of a mobile communication system for implementing the disclosure and an entity located outside a network according to an embodiment of the disclosure;
FIG. 2 illustrates a method of transmitting unmanned aerial system (UAS) authentication data using parameter provision according to an embodiment of the disclosure;
FIG. 3 illustrates a method of transmitting UAS authentication data that extends expected UE behavior according to an embodiment of the disclosure;
FIG. 4 illustrates a method of transmitting UAS authentication data using service parameter service according to an embodiment of the disclosure;
FIG. 5 illustrates a method of correcting unmanned aerial vehicle traffic management (UTM) authentication supporting a core network according to an embodiment of the disclosure;
FIG. 6 illustrates the structure of a network entity according to an embodiment of the disclosure;
FIG. 7 illustrates a method of a first entity performing a policy control function (PCF) in a mobile communication system according to an embodiment of the disclosure;
FIGS. 8A and 8B illustrate a procedure for transmitting information on an allowed or non-allowed area of a UAV using a PCF, according to various embodiments of the disclosure;
FIGS. 9A and 9B illustrate a procedure for transmitting information on an allowed area or non-allowed area satisfying requested communication quality requirements using a network data analytics function (NWDAF), according to various embodiments of the disclosure;
FIGS. 10A and 10B illustrate a procedure for transmitting information on an allowed area or non-allowed area that satisfies a requested communication quality requirement using a PCF and a NWDAF, according to various embodiments of the disclosure;
FIG. 11 illustrates the structure of an entity according to an embodiment of the disclosure;
FIG. 12 illustrates a method of a first entity performing a PCF in a mobile communication system according to an embodiment of the disclosure; and
FIG. 13 illustrates a method of a first entity that performs a NWDAF in a mobile communication system according to an embodiment of the disclosure.

Throughout the drawings, like reference numerals will be understood to refer to like parts, components, and structures.

### [Mode for the Invention]

The following description with reference to the accompanying drawings is provided to assist in a comprehensive understanding of various embodiments of the disclosure as defined by the claims. It includes various specific details to assist in that understanding but these are to be regarded as merely exemplary. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Further, the "unit" in the embodiments may include one or more processors.

In describing embodiments, main targets of description are a wireless access network (i.e., a new RAN (NR)) and a packet core (a 5G system, a 5G core network, or a next-generation core (NG core)), which is a core network, in 5G mobile communication standards specified by the 3GPP which is a mobile communication standard standardization organization. However, the main subject matter of the disclosure may also be applied to other communication systems having similar technical backgrounds through partial modification without largely departing from the scope of the disclosure, and this application may be determined by those skilled in the art in the technical field of the disclosure.

In the following description, the disclosure uses some terms and names defined in 3rd generation partnership project long term evolution (3GPP LTE) standards (standards for 5G, NR, LTE, and other similar systems) for the convenience of description. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

The disclosure relates to a method for supporting the operation of an unmanned aerial vehicle (UAV) in a mobile communication system conforming to the 3GPP standard, and devices or objects described below may interact to achieve the purposes of the disclosure.

In the disclosure, a terminal refers to an unmanned aerial vehicle and an unmanned aerial vehicle controller, and a form in which the forms of these two terminals are configured to enable the unmanned aerial vehicle to be operational is referred to as an unmanned aerial system (UAS).

In the disclosure, the unmanned aerial vehicle is a collective term for an aircraft that is capable of flying, such as a hobby or commercial drone that can be controlled at a short distance and an unmanned reconnaissance aircraft that is operated through a specific track, and is operated remotely or autonomously in order for an operator to perform mission without boarding the aircraft body. In addition, the unmanned aerial vehicle to which the disclosure is applied is equipped with a device capable of communication such as a mobile communication network, Wi-Fi, or Bluetooth, so that the device can perform wireless communication with an unmanned aerial vehicle controller, an unmanned aerial vehicle capable of short-range communication, or an entity located outside such as a control center.

In the disclosure, the unmanned aerial vehicle controller may refer to a specific physical device, and may be a form of software running on a cloud or a specific server. The unmanned aerial vehicle controller has a function of accessing a 3GPP network through an LTE (E-UTRA, GERAN, or UTRA), a 5G NR, and a non-3GPP network and does not support only connection with a core network or a data network, but may additionally enable communication between short-range terminals using a side link defined by 3GPP. In addition, in order to perform a role as a terminal conforming to the 3GPP standard, an apparatus and protocol for communication with a base station and a core network must be supported. As to the unmanned aerial vehicle, a human aviator does not board an aircraft and uses a communication network to receive an operation-related signal and the unmanned aerial vehicle is operated accordingly.

The unmanned aerial vehicles may temporarily enter an area where communication is not possible, may cause interference to other terminals that operate on the ground due to high altitude, or may cause unstable communication due to interference. Therefore, the mobile communication system must provide a method for maintaining high connectivity for the safe operation of such unmanned aerial vehicles, and also need a method of preventing collisions with buildings, aircraft, other unmanned aerial vehicles, or objects floating in the air in areas where communication is temporarily unavailable.

Meanwhile, various embodiments include, for example, a method of supporting the operation of an unmanned aerial system (UAS) through a mobile communication system conforming to the 3GPP standard.

According to the current 3GPP standard document, the UAS is composed of an unmanned aerial vehicle (UAV) and a UAV controller, and the UAV refers to an aircraft that is operated without a person on board. The UAV and UAV controller constituting the UAS do not necessarily have a one-to-one relationship. In addition, the UAS is connected to an unmanned aerial traffic management system (UTM), which is responsible for controlling UASs, to provide various functions, such as performing UAS authentication, performing legitimate user verification procedures through verification of security keys of the UAV and the UAV controller, providing static or real-time information required for unmanned aerial adjustment, route authorization through confirmation of the mission of a flight route, forced transfer of UAS control authority in case of emergency, and the like. Therefore, the 3GPP mobile communication system must provide network services efficiently so that devices constituting each UAS can be controlled through UTM, while supporting the network connectivity of the UAV and the UAV controllers constituting the UAS. In the UAS operation process, the role of 3GPP is not simply to provide connectivity between UAS terminals or UTM, but additional network services may be provided. Representatively, an entity that authenticates the UAS is UTM, and in this process, the core network of the mobile communication system may additionally authenticate UAS terminals and may transmit the authentication result to UTM to reinforce the authentication process. Second, the 3GPP can improve the accuracy and reliability of the location of the UAS terminal by additionally using the location information of the terminal transmitted by the core network, in addition to the location information transmitted by the UAS terminals. Some embodiments also include a method capable of helping to calculate a final movement route of an unmanned aerial vehicle by additionally utilizing information such as a service restriction area of mobile communication transmitted by the core network. In the disclosure, a method of operating an initial unmanned aerial vehicle through a mobile communication network includes a method of optimizing control signals that may occur in the mobile communication network to prevent unnecessary signals in the operation of the unmanned aerial vehicle from being generated, and also includes a method of estimating the location of an aircraft moving in the air at high speed and a method of reducing paging failure provability through this estimation method. In addition, the method of operating the initial unmanned aerial vehicle through the mobile communication network includes a method of dynamically changing service registration areas according to the mission of the UAV to achieve special missions conducive to the public interest, such as long-term transportation and fire suppression. In relation to the main problem to be solved in the disclosure, when operating the UAS in the above situation, in order to effectively support the mobility of the terminal moving in the air in the mobile communication system, the service restriction area and service registration area of the terminal should be optimally allocated in consideration of the operation mission and route of each UAS. If the service restriction area of the terminal is not properly allocated, the communication service of the terminal may be cut off because the terminal cannot use a communication service in a specific area or handover to a specific base station is impossible. In the case of the registration area, it is an arbitrary area for the terminal to determine its approximate location, and the terminal can use corresponding services only within the registration area allocated during registration. In the case of a terminal that has moved out of the registration area, the registration procedure must be performed again to receive and update a new registration area of the terminal, and in this process, unnecessary exchange of control signals between the mobile communication core network and the terminal may occur. The disclosure includes a method of changing the service restriction area in consideration of the operation mission and route of UAS, allocating the registration area considering the route in the changed service restriction area to minimize the control signal between the network and the terminal, whereby the terminal can stably receive communication services.

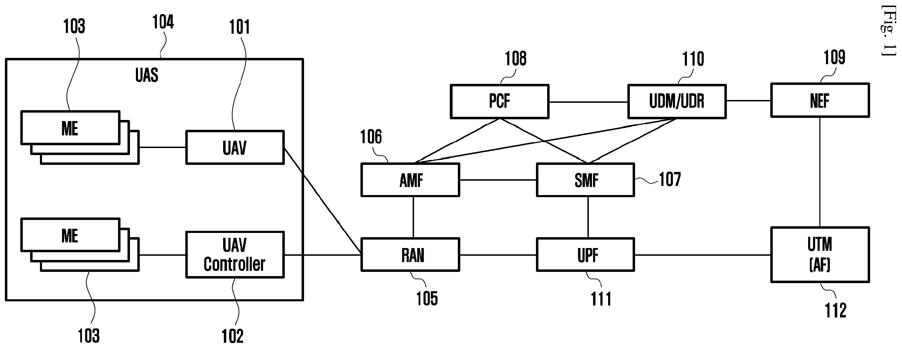

FIG. 1 illustrates each terminal, device, and objects for implementing according to an embodiment of the disclosure. Referring to FIG. 1, entities for implementing the disclosure may include a UAV 101, a UAV controller 102, a terminal device (ME) 103 that shares the UAV or services, a UAS 104 composed of the UAV and the UAV controller, a base station 105 that supports wireless communication, an AMF 106, an SMF 107, a PCF 108, an NEF 109, a UDM or a UDR 110, a UPF 111, and/or an unmanned aerial traffic management system (UTM) 112, and the configuration and function of each entity will be exemplarily described below.

A radio access network (RAN) refers to a technology used for wireless communication between a base station and a terminal, such as 5G-NR, E-UTRAN, UTRAN, and GERAN, and the terminal accesses an eNB or gNB as a base station that supports mobile communication wireless technology for wireless communication to receive communication services. The base station may transmit control signals or data transmitted from terminals to a device located in a core network while interacting with the core network to thereby receive settings, transmit and receive data, or perform procedures for management. In addition, the terminal can be connected to a data network by utilizing a technology using a side link such as prose (proximity service) that performs direct communication between the terminals without being connected to the base station or a non-3GPP wireless access technology such as Wi-Fi and Bluetooth.

Hereinafter, among various elements constituting a core network, devices directly related to the disclosure will be exemplarily described.

An access and mobility management function (AMF) is a device for managing the access and mobility of a terminal, and serves as a terminal-core network endpoint through which the terminal connects to other devices of the core network via an RAN. Functions provided by the AMF may include, for example, functions such as registration, connection, reachability, mobility management, access confirmation/authentication, and mobility event generation of the terminal.

A session management function (SMF) performs a PDU session management function of the terminal. For example, the SMF may perform functions such as session management function by establishing, modifying, and releasing a session and maintaining a tunnel between UPF and AN required for this, IP address allocation and management function of the terminal, ARP proxy function, user plane selection and control, traffic processing control in UPF, billing data collection control, and the like.

A policy control function (PCF) may be in charge of determining policies for access/mobility and session management applied by AMF and SMF. For example, the PCF may govern the behavior of the entire network and may provide policies to be implemented to network functions (NFs) constituting the control plane. In addition, the PCF can access information related to policy-making by accessing unified data repository (UDR).

A network exposure function (NEF) may be in charge of transmitting or receiving events occurring in the mobile communication network and capabilities to be supported to or from the outside. For example, the NEF performs functions such as safe provisioning of external application information in the core network, internal/external information conversion, and redistribution after storing functions received from other NFs in UDR. Unified data management (UDM) and unified data repository (UDR) are independent network functions, but their functions and roles are similarly used in this embodiment so that the UDM and the UDR will be described simultaneously. The UDM may perform, for example, generation of AKA authentication information for 3GPP security, processing of user ID, inverse concealment of subscriber concealed ID (SUPI), list management of NFs currently supporting a UE, subscriber (subscription) management, SMS management, etc. The UDR may perform a function of storing and providing subscriber information managed by the UDM, structured data for exposure, and application data related to NEF or service.

A user plane function (UPF) may perform the role of processing actual user data, and processing packets to transmit a packet generated by a UE to an external data network or to transmit data from the external data network to the UE. The main functions provided by the UPF may include, for example, acting as an anchor between radio access technologies, providing connectivity with a PDU session and the external data network, packet routing and forwarding, packet inspection, user plane policy application, traffic usage report generation, buffering, and the like.

A network data analytics function (NWDAF) may collect events or information occurring within a network and may use a tool such as an analysis tool or machine learning to transmit statistics, prediction, and recommendation information related to specific information to NF, AF, and OAM. For example, the NWDAF may perform functions such as collecting data from NF/AF/OAM, registering NWDAF services and exposing metadata, and providing network analysis information to NF/AF.

The UTM performs the role of controlling the traffic of the unmanned aerial vehicle, where the traffic includes the role of controlling the actual operation of physical unmanned aerial vehicles other than network traffic. The main functions provided by the UTM may include, for example, authentication of UAV and UAV controller, authentication of UAS configuration, provision of information for efficient operation of UAV, authentication and route verification of UAV scheduled to be operated, current route and location verification of UAV, control of UAV in case of emergency, and the like. An entity that manages the UTM can be a government or public institution, and an agent delegated by them can operate the UTM. In the disclosure, the UTM may perform the role of an application function (AF) or may interlock with the AF to provide information related to the operation of the UAV to the control plane through the NEF of the 3GPP mobile communication network. In addition, in the mobile communication network, the AF is a device or entity that communicates with the 3GPP core network to support specific services, and as the currently supported functions, functions such as providing application influence on traffic routing, providing service or UE-related information by accessing NEF, and providing necessary information for PCF. In the disclosure, when the UTM is operated from a provider that a mobile communication network operator can trust, the UTM may be regarded as a trusted AF.

Information exchange and control signal exchange between the above-described entities use procedures, interfaces, and protocols defined in the 3GPP standard specification document. However, all terms included in the disclosure are not limited by the 3GPP terms and names, and may be equally applied to systems and devices conforming to other standards. In describing the embodiments in detail, the communication standard defined by the 3GPP will be the main target. However, the main subject matter of the disclosure can be applied to other communication systems having a similar technical background with slight modifications without significantly departing from the scope of the disclosure, which is determined by a person having ordinary technical knowledge in the technical field of the disclosure.

In various embodiments described below, at least one embodiment may be performed independently or in association with each other.

### [First embodiment] - Method of transmitting UAS authentication data using parameter provision

A mobile communication system, for example, a UAV and a UAV controller using a 5G mobile communication system may undergo a registration process in the same manner as a UE using a general 3GPP mobile communication network, and may receive authentication and authorization related to the use of the mobile communication network. In this process, the core network supports UEs constituting a UAS to communicate with a UTM. The communication process with the UTM may 1) transmit UAS-related information to the UTM through a user plane using a PDU session, 2) transmit the same through a secondary DN authentication defined in the 3GPP standard during a PDU session creation process, or 3) support communication to support authentication between the UAS constituent device and the UTM through a control plane by using non access stratum (NAS). In the disclosure, it is assumed that a UE is authenticated to the 3GPP network, or that information exchange for authentication between the UAS and UTM performed during the authentication procedure is performed. In addition, the UAS and UTM may exchange authentication-related information through a separate method other than the above-described method to transmit additional information to the 3GPP core network.

As to the authentication between the UAS constituent device and the UTM, the operation of flight of the UAS is authenticated in consideration of a legitimate user, a correct route, a normal device status, the availability of flight, confirmation of the flight mission, and flight routes and/or schedules of other UAVs or other aircraft in relation to the operation of the UAS.

For the purpose of the UTM authentication, the UAV may transmit, to the UTM, unique identity, UE capability of the UAV, manufacturer & model, serial number, take-off weight, position, owner identify, owner address, owner contact details, owner certification, take-off location and time, flight purpose (mission type), route data, and/or operating status as the authentication information (data). In this case, the UAV may transmit the authentication information to the UTM through the 3GPP core network.

For the purpose of the UTM authentication, the UAV controller may transmit, to the UTM, for example, unique identify, UE capability of the UAV controller, position, owner identity, owner address, owner contact details, owner certification, the identity of a UAV operator who operates the UAV controller, and/or UAV operator license and certification, and the like as authentication information (data). In this case, the UAV controller can transmit the authentication information to the UTM through the 3GPP core network.

When the 3GPP core network transmits the authentication information of the UAV or UAV controller to the UTM, international mobile subscriber identity (IMSI) which is the unique identifier of the UE used in the 3GPP, international mobile equipment identity (IMEI), mobile station international subscriber directory number (MSISDN), generic public subscription identifier (GPSI), and the like can be additionally transmitted to the UTM, which can be used to authenticate the UAS constituent devices.

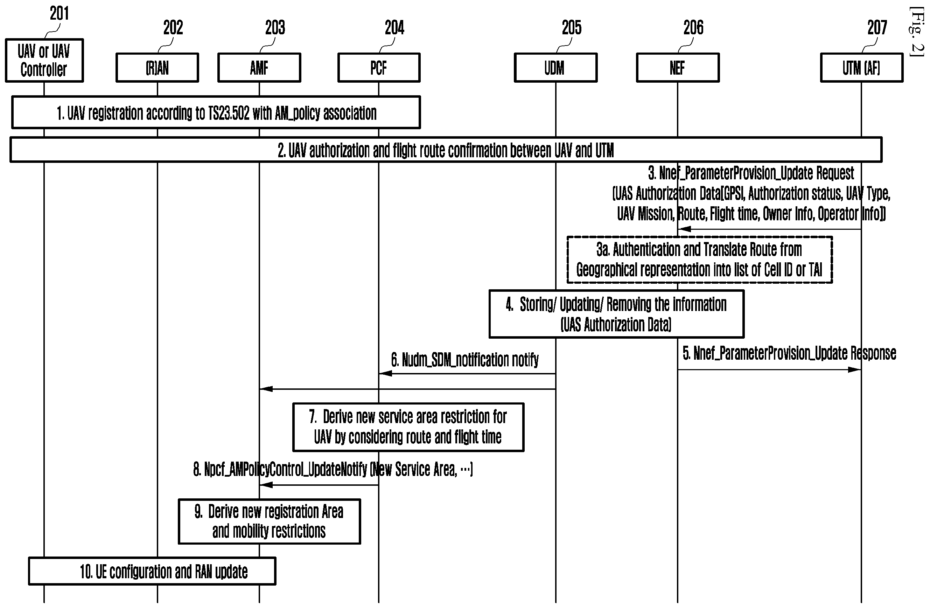

Hereinafter, with reference to FIG. 2, a first embodiment will be exemplarily described according to an embodiment of the of the disclosure.

FIG. 2 illustrates a method of transmitting unmanned aerial system (UAS) authentication data using parameter provision according to an embodiment of the disclosure.

Referring to FIG. 2, includes a method in which a UTM (AF) authenticates the operation of a UAS and UAS operation information obtained in this process is transmitted to a 3GPP core network to optimize the service restriction area and registration area of a UAS UE.

Operation 1 - In order to use the 3GPP mobile communication network, the UAV or UAV controller 201 transmits an initial registration request message to an AMF 203 in the same manner as a general UE. At this time, the initial behavior of the UE for transmission of the registration message, connection with a base station 202, and signal transmission procedures of the base station follow procedures defined in the 3GPP standard. Through the registration procedure, the UE is successfully registered in 3GPP mobile communication and receives information related to the use of the UE. In addition, it is possible to use procedures such as establishing a PDU session for data transmission through a user plane later and NAS transport for transmitting signals to the control plane. During the registration process, the AMF may establish AM policy association to obtain the UE's access and mobility-related policy from a PCF 204. Additionally, when the AMF determines that the UE is the UAS UE through the subscriber information of the UE, the AMF can establish AM policy association with the PCF. At this time, the PCF applies for event-related subscription to a UDM 205 in order to receive a subscriber data management (SDM)-related event that may occur in later steps. During the registration process, the AMF can selectively apply to the UDM for SDM subscription to the UE in order to obtain the subscriber information of the UE from the UDM and to identify changes. If the AMF recognizes that the UE that currently transmits the registration request is the UAS UE, and if this is recognized during step of importing the SDM and subscription to the change in the SDM is not requested, the AMF can request the SDM subscription from the UDM to detect a change in the subscriber information.

The status of the UE immediately after the registration is successfully completed is a status in which only the 3GPP registration procedure has been completed and authentication related to the operation of the UAV through a UTM 207 has not been completed. Accordingly, according to a mobile communication network operation policy or a service contract between a mobile communication operator and a UTM operator, the UE may not be able to communicate through an external data network.

Operation 2 - When the UE is successfully registered in the 3GPP system, the UE authenticates a UAV, a UAV controller, and a UAS constituting the UAV and the UAS controller through the UTM. In this process, each UE transmits information necessary for the above-described authentication to the UTM. Additionally, the core network can know that the corresponding UE can be composed of the UAS based on the subscriber information of the UAV and the UAV controller, and can know that additional authentication procedures with the UTM can occur. Through this, the core network may perform provisioning on a route through which control signals or data traffic occurring later in the UTM can be transmitted to the UTM. At this time, as to the data transmission between the UE and the UTM, as described above, 1) transmitting authentication data to the UTM as general data through a user plane by using a PDU session, 2) transmitting the authentication data through secondary DN authentication in a process of authenticating the PDU session, and 3) transmitting the authentication data through an NAS transport method via an NEF by using the control plane may be used. At least one of the three methods may be supported in the disclosure. In the process of transmitting the authentication data of the UAS UE to the UTM through the above method, the 3GPP core network can transmit, to the UTM, additional information such as identifier and location information used by 3GPP, such as IMEI, IMSI, and MSISDN, and a UE communication status (access radio communication technology or radio access capability) together with the UAS authentication data transmitted by the UE.

The UTM that has received the UAS authentication information from the UTM UE and the 3GPP core network may permit or deny the flight of the UAS in consideration of the received information, internal policy, current local situation, route, and the like. In the case of rejection, the UTM may transmit the cause of a rejection failure to the UE. For example, the UTM may recognize that the flight is not permitted on a specific route, and may transmit a flight rejection message indicating that the specific route includes a flight prohibition route of the UE. If the reason for the rejection is correctable by identifying the reason for the rejection, the UE can newly receive the authentication procedure by transmitting a new authentication message to the UTM through repetition of operation 2.

Detailed authentication-related technologies and procedures may be outside the scope of the disclosure, but generally used authentication technologies may be applied.

Operation 3 - When the authentication of the UE constituting the UAS is successfully performed through the UTM, the UTM may inform the 3GPP (or 3GPP core network) of the authentication result through an NEF 206. At this time, the UTM may be the same as the AF, or may transmit authentication-related information through the NEF of 3GPP through an intermediate device that supports the AF. For example, the UTM may transmit information related to the UAS UE to the NEF by using Nnef_ParameterProvision Update Request provided by the NEF. The transmitted authentication data may be contained in a data container named, for example, UAS authorization data and transmitted to the NEF through the UTM (AF). The UAS authorization data (UAS authorization data container) includes an external identifier of the UE (GPSI), UTM authentication success/failure status (authorization status), UAV type, operation purpose (UAV mission), route, flight time, owner information, and/or operator information, and this information may be transmitted to the NEF. In this process, when the UTM knows IMSI, IMEI, and MSISDN of the UE, these may be transmitted as the identifier of the UE instead of GPSI. Although the case of storing and transmitting the UAS authentication-related information by using the UAS authorization data container has been described in the disclosure, if the transmitted information (data) is the same or similar, the same effect can be obtained by transmitting each piece of data to the NEF without using the container.

Optionally, if the authentication fails, there is no need to proceed with the subsequent process.

Operation 3a - Optional process. The NEF confirms that the data sent by the UTM is normal and is a message transmitted by the UTM with legitimate use and access rights. If it is confirmed that the message is normally transmitted by the UTM, the NEF converts information that needs to be converted into information used inside 3GPP among the transmitted authentication data into a form used inside the core network. For example, the GPSI can be converted into SUPI and IMSI used in the core network, and route information can be converted into a form of list of TAI. In addition, when the status is represented by an encoding method for concise expression of the information, conversion of such information may be performed. For example, if authorization status = "true", it can be converted into information in a form used by internal devices and objects such as authorization status= 1 for concise expression.

Operation 4 - The NEF stores the UTM authentication-related information transmitted in operation 3 in the UDM. The UDM can store the authentication data in the UDR by internally using services provided by the UDR such as Nudr _DM_Query and Nudr_DM_Update. When data is stored in the UDM, the UAS authorization data container can be stored directly, and each component inside each container can be stored as a separate field. If there is a field corresponding to the type of the subscriber information according to the manager's policy, the corresponding field of the subscriber information or UE context may be updated. Methods of directly storing the container, storing each data, and updating a specific field of the subscriber information may be selectively used, and may be all used simultaneously or in combination for reliability according to the policy. At the time of storage, the UDM can additionally store an AF ID of the UTM and transaction reference ID information to find the UTM that has transmitted the message separately from the UAS authorization data container. When the storage of requested information is completed, the UDM can transmit a notification that requested parameter provision has been completed to the NEF.

Operation 5 - When receiving a response for provisioning from the UDM, the NEF may transmit a response to ParameterProvision to the UTM. For example, the NEF may transmit the response to ParameterProvision to the UTM by using Nnef_ParameterProvision Update Response provided by the NEF.

Operation 6 - When there is a change in the subscriber-related information or the UE context due to the UAS authorization data stored in operation 4, the UDM notifies NFs having subscribed to the corresponding event that the UAS authorization data is newly provisioned and the subscriber information is changed. For example, the PCF and AMF having subscribed to the event in operation 1 may correspond to these NFs. Therefore, the AMF and the PCF supporting the UAS UE can know that the UAS authorization data has been newly updated through an SDM notification event sent by the UDM, and the UAS authorization data is transmitted to the PCF and the AMF within a notification message (e.g., Nudm _SDM notification notify).

Operation 7 - The PCF having received the UAS authorization data from the UDM can know from the data that UTM authentication success/failure status (authorization status) of the UAS UE, UAV type, flight purpose (UAV mission), route, flight time, owner information, and/or operator information. Through this, the PCF may change mobility restriction of the UAS UE through an internal policy or a contract with the UTM operator in advance. As to the mobility restriction defined in 3GPP, a combination of radio access technology (RAT) restriction, forbidden area, service area restriction, and core network type restriction may be roughly utilized.

The RAT restriction prohibits access to a PLMN using a specific RAT defined by 3GPP. The forbidden area prohibits all communication attempts to a specific PLMN within an area included in the forbidden area list. The service area restriction can be broadly divided into two types of areas such as service non-allowed area and service allowed area, which can be configured in the form of list for each area. General communication services can be used within the service allowed area, and within the service non-allowed area, the UE is not allowed to make a service request or SM signaling from the core network. Finally, the core network type restriction prohibits restrictions on a specific type of the core network, such as EPC or 5GC.

The PCF having receiving the UAS authorization data from the UTM may generate a new mobility restriction-related policy with reference to the UAS authorization data. For example, the PCF may temporarily change the list of the service forbidden areas or the service non-allowed areas when the specificity of the purpose such as fire suppression or long-term transport is accepted or through a contractual relationship with the UTM. At this time, in order to consider whether the corresponding service is allowed, the PCF may consider UTM authentication success/failure status (authorization status), UAV type, operation purpose (UAV mission), route, flight time, owner information, and/or operator information in a combination manner. Through this, in order for the UAV to achieve its purpose, specific mobility restriction is temporarily permitted to be released or changed during the corresponding operation. This permission may be performed for a specific period through a specific timer, or may be temporarily applied as permission during this registration period.

Operation 8 - The PCF transmits the newly generated mobility-related policy to the AMF currently supporting the UAS UE through Npcf_AMPolicyControl UpdateNotify.

Operation 9 - The AMF having received the new mobility-related policy from the PCF updates information related to access to the existing UE context and mobility as the received information. Additionally, the PCF may generate a new registration area of the UE based on the updated mobility-related policy. In the newly generated registration area, an area in which control signals can be optimized within the operating range of the UAV is calculated by utilizing the UE's route and flight time information provided in the previous operation.

Operation 10 - In order to update the newly transmitted mobility-related policy and registration area in the UE, the AMF transmits, to the UE, the mobility restriction policy and registration area which are updated through a mobility-related UE configuration procedure defined by 3 GPP. If necessary, the UE can perform a new registration procedure. In this process, the AMF can transmit RAN support information (core network assisted ran parameters) related to the behavior of the UE. The RAN support information includes expected UE behavior, expected handover behavior, expected UE mobility (stationary or mobile), expected UE trajectory, and/or behavior information of the UE excluding the predicted UE route. Such information can be generated by the AMF by utilizing the UAS authorization data.

### [Second embodiment] - Method of transmitting UAS authentication data extending expected UE behavior

The disclosure includes a method of transmitting the flight mission, time, and route of a UAV certified by the UTM by extending expected UE behavior defined in the current 3GPP standard. A method of extending the expected UE behavior to include the UTM authentication method is possible in the form of Tables 1 and 2. In the case of Table 1, UAS authorization data is expanded as one field, and Table 2 uses a method of mapping each data of authentication information into one field and extending it. The information contained in both methods is the same.

Table 1 adds UAS authorization data to new field.

**[Table 1]**

| **Expected UE** Behavior parameter | **Description** |
|---|---|
| Expected UE Moving Trajectory | Identifies the UE's expected geographical movement |
| | Example: A planned path of movement |
| Stationary Indication | Identifies whether the UE is stationary or mobile [optional] |
| Communication Duration Time | Indicates for how long the UE will normally stay in CM-Connected for data transmission.Example: 5 minutes. |
| | [optional] |
| Periodic Time | Interval Time of periodic communication |
| | Example: every hour. |
| | [optional] |
| Scheduled Communication Time | Time and day of the week when the UE is available for communication. |
| | Example: Time: 13:00-20:00, Day: Monday. |
| | [optional] |
| Battery Indication | Identifies power consumption criticality for the UE: if the UE is battery powered with not rechargeable/not replaceable battery, battery powered with rechargeable/replaceable battery, or not battery powered.[optional] |
| Traffic Profile | Identifies the type of data transmission: single packet transmission (UL or DL), dual packet transmission (UL with subsequent DL or DL with subsequent UL), multiple packets transmission[optional] |
| Scheduled Communication Type | Indicates that the Scheduled Communication Type is Downlink only or Uplink only or Bi-directional [To be used together with Scheduled Communication Time] |
| | Example: <Scheduled Communication Time>, DL only. |
| | [optional] |
| UAS authorization data | Contains information of scheduled UAS flight operation. It can include authorization status, UAV type, UAV mission, route, flight time, owner information, operator information. |

Table 2 adds UAS authorization data for each parameter.

**[Table 2]**

| **Expected UE** Behavior parameter | **Description** |
|---|---|
| Expected UE Moving Trajectory | Identifies the UE's expected geographical movement |
| | Example: A planned path of movement |
| Stationary Indication | Identifies whether the UE is stationary or mobile [optional] |
| Communication Duration Time | Indicates for how long the UE will normally stay in CM-Connected for data transmission. Example: 5 minutes. |
| | [optional] |
| Periodic Time | Interval Time of periodic communication |
| | Example: every hour. |
| | [optional] |
| Scheduled Communication Time | Time and day of the week when the UE is available for communication. |
| | Example: Time: 13:00-20:00, Day: Monday. |
| | [optional] |
| Battery Indication | Identifies power consumption criticality for the UE: if the UE is battery powered with not rechargeable/not replaceable battery, battery powered with rechargeable/replaceable battery, or not battery powered. [optional] |
| Traffic Profile | Identifies the type of data transmission: single packet transmission (UL or DL), dual packet transmission (UL with subsequent DL or DL with subsequent UL), multiple packets transmission[optional] |
| Scheduled Communication Type | Indicates that the Scheduled Communication Type is Downlink only or Uplink only or Bi-directional [To be used together with Scheduled Communication Time] |
| | Example: <Scheduled Communication Time>, DL only. |
| | [optional] |
| UAS authorization status | Indicate the UE has been authorized by UTM |
| UAV type | Identifies the type of UAV |
| UAV mission | Identifies the mission of UAV. It can be represented as categories such as emergency, logistics, patrol, sensing, etc. |
| Route | The scheduled route of UAV. |
| Flight time | The scheduled flight time of UAV |
| Owner and operator information | The contact or detailed information about UAV owner or operator. |

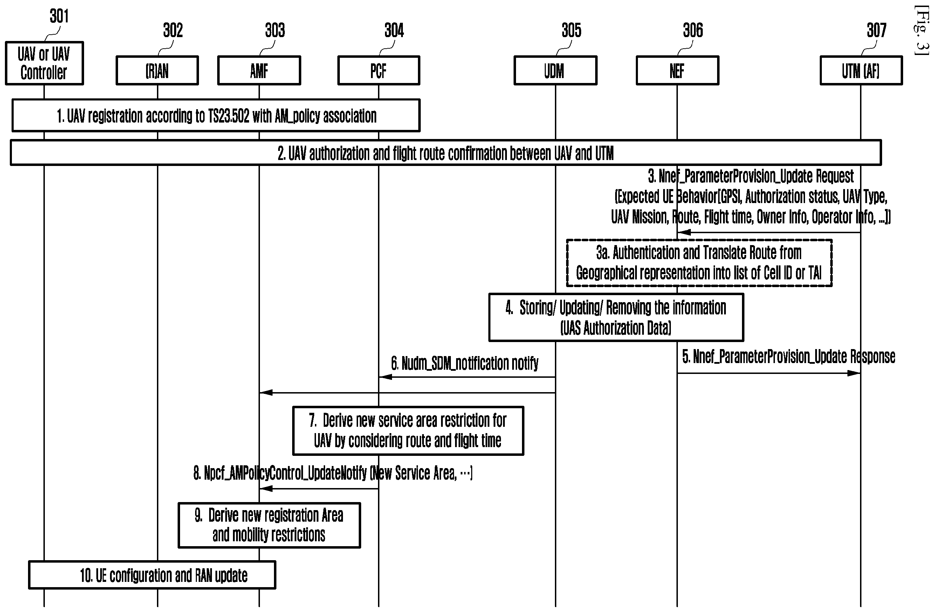

Hereinafter, a second embodiment will be exemplarily described with reference to FIG. 3.

FIG. 3 illustrates a method of transmitting UAS authentication data that extends expected UE behavior according to an embodiment of the disclosure.

Operation 1 - In order to use a 3GPP mobile communication network, a UAV or a UAV controller 301 transmits an initial registration request message to an AMF 303 in the same manner as a general UE. At this time, the initial behavior of the UE for transmission of the registration message, connection with a base station 302, and signal transmission procedures of the base station follow procedures defined in the 3GPP standard. Through the registration procedure, the UE is successfully registered in 3GPP mobile communication and receives information related to the use of the UE. In addition, it is possible to use procedures such as establishing a PDU session for data transmission through a user plane later and NAS transport for transmitting signals to the control plane. During the registration process, the AMF may establish AM policy association to obtain the UE's access and mobility-related policy from a PCF 304. Additionally, when the AMF determines that the UE is a UAS UE through subscriber information of the UE, the AMF can establish AM policy association with the PCF. At this time, the PCF applies for event-related subscription to a UDM 305 in order to receive a subscriber data management (SDM)-related event that may occur in later operations. During the registration process, the AMF can selectively apply to the UDM for SDM subscription to the UE in order to obtain the subscriber information of the UE from the UDM and to identify changes. If the AMF recognizes that the UE that currently transmits a registration request is the UAS UE, and if this is recognized during step of importing the SDM and subscription to the change in the SDM is not requested, the AMF can request the SDM subscription from the UDM to detect a change in the subscriber information.

The status of the UE immediately after the registration is successfully completed is a status in which only the 3GPP registration procedure has been completed and authentication related to the operation of the UAV through a UTM 307 has not been completed. Accordingly, according to a mobile communication network operation policy or a service contract between a mobile communication operator and a UTM operator, the UE may not be able to communicate through an external data network.

Operation 2 - When the UE is successfully registered in the 3GPP system, the UE authenticates a UAV, a UAV controller, and a UAS constituting the UAV and the UAS controller through the UTM. In this process, each UE transmits information necessary for the above-described authentication to the UTM. Additionally, the core network can know that the corresponding UE can be composed of the UAS based on the subscriber information of the UAV and the UAV controller, and can know that additional authentication procedures with the UTM can occur. Through this, the core network may perform provisioning on a route through which control signals or data traffic occurring later in the UTM can be transmitted to the UTM. At this time, as to the data transmission between the UE and the UTM, as described above, 1) transmitting authentication data to the UTM as general data through a user plane by using a PDU session, 2) transmitting the authentication data through secondary DN authentication in a process of authenticating the PDU session, and 3) transmitting the authentication data through an NAS transport method via an NEF 306 by using the control plane may be used. At least one of the three methods may be supported in the disclosure. In the process of transmitting the authentication data of the UAS UE to the UTM through the above method, the 3 GPP core network can transmit, to the UTM, additional information such as identifier and location information used by 3GPP, such as IMEI, IMSI, and MSISDN, and a UE communication status (access radio communication technology or radio access capability) together with the UAS authentication data transmitted by the UE.

The UTM that has received the UAS authentication information from the UTM UE and the 3GPP core network may permit or deny the flight of the UAS in consideration of the received information, internal policy, current local situation, route, and the like. In the case of rejection, the UTM may transmit the cause of a rejection failure to the UE. For example, the UTM may recognize that the flight is not permitted on a specific route, and may transmit a flight rejection message indicating that the specific route includes a flight prohibition route of the UE. If the reason for the rejection is correctable by identifying the reason for the rejection, the UE can newly receive the authentication procedure by transmitting a new authentication message to the UTM through repetition of operation 2.

For the purpose of the UTM authentication, the UAV may transmit, for example, unique identify, UE capability of the UAV, manufacturer & model, serial number, take-off weight, position, owner identity, owner address, owner contact details, owner certification, take-off location and time, mission type, route data, and/or operating status.

For the purpose of the UTM authentication, the UAV controller may transmit unique identify, UE capability of the UAV controller, position, owner identify, owner address, owner contact details, owner certification, identity of a UAV operator who operates the UAV controller, and/or UAV operator license and certification.

When the 3GPP core network transmits the authentication information of the UAV or UAV controller to the UTM, international mobile subscriber identity (IMSI) which is the unique identifier of the UE used in the 3GPP, international mobile equipment identity (IMEI), mobile station international subscriber directory number (MSISDN), generic public subscription identifier (GPSI), and the like can be additionally transmitted to the UTM, which can be used to authenticate the UAS constituent devices.

Detailed authentication-related technologies and procedures may be outside the scope of the disclosure, but generally used authentication technologies may be applied.

Operation 3 - When the authentication of the UE constituting the UAS is successfully performed through the UTM, the UTM may inform the 3GPP core network of the authentication result through the NEF 206. At this time, the UTM may be the same as the AF, or may transmit authentication-related information through the NEF of 3GPP through an intermediate device that supports the AF. For example, the UTM may transmit information related to the UAS UE to the NEF by using Nnef_ParameterProvision Update Request provided by the NEF. The transmitted data may be an expected UE behavior parameter, and may follow, for example, the parameters in Table 1 or 2. The UE expected behavior parameter may be determined in consideration of the authentication result of the UE, and may be transmitted to the NEF through the UTM (AF). Among the transmitted data, a UAV-related parameter includes an external identifier of the UE (GPSI), UTM authentication success/failure status (authorization status), UAV type, operation purpose (UAV mission), route, flight time, owner information, and/or operator information, and this information may be transmitted to the NEF. In this process, if the UTM knows the IMSI, IMEI, and MSISDN of the UE, these may be transmitted as the identifier of the UE instead of the GPSI. Referring to FIG. 3, UAS-related parameters are added by extending the UE behavior parameter, but it is also possible to transmit UAS authentication-related information using a UAS authorization data container as shown in Table 1. In addition, additional behavioral information or network configuration parameters related to the UE may be additionally calculated and transmitted. The network configuration parameter defined in 3GPP may include a maximum response time, a maximum latency, and/or a suggested number of downlink packets.

Optionally, if the authentication fails, there is no need to proceed with the subsequent process.

Operation 3a - Optional process. The NEF confirms that the data sent by the UTM is normal and is a message transmitted by the UTM with legitimate use and access rights. If it is confirmed that the message is normally transmitted by the UTM, the NEF converts information that needs to be converted into information used inside 3GPP among the transmitted authentication data into a form used inside the core network. For example, the GPSI can be converted into SUPI and IMSI used in the core network, and route information can be converted into a form of list of TAI. In addition, when the status is represented by an encoding method for concise expression of the information, conversion of such information may be performed. For example, if authorization status = "true", it can be converted into information in a form used by internal devices and objects such as authorization status=1 for concise expression.

Operation 4 - The NEF stores the UTM authentication-related information transmitted in operation 3 in the UDM. The UDM can store the authentication data in the UDR by internally using services provided by the UDR such as Nudr _DM_Query and Nudr DM Update. At the time of storage, the UDM can additionally store a UTM's AF ID and transaction reference ID information to find the UTM having transmitted a message separately from the UAS authorization data container. When the storage of requested information is completed, the UDM can transmit a notification that requested parameter provision has been completed to the NEF.

Operation 5 - When receiving a response for provisioning from the UDM, the NEF may transmit a response to ParameterProvision to the UTM. For example, the NEF may transmit the response to ParameterProvision to the UTM by using Nnef_ParameterProvision Update Response provided by the NEF.

Operation 6 - When there is a change in the subscriber-related information due to the UE expected behavior data stored in operation 4, the UDM notifies NFs having subscribed to the corresponding event that the corresponding data is newly provisioned so that the subscriber information or the UE information is changed. For example, the PCF and AMF having subscribed to the event in operation 1 may correspond to these NFs. Therefore, the AMF and the PCF supporting the UAS UE can know that the UE expected behavior has been newly updated through an SDM notification event sent by the UDM, and the UE behavior information is transmitted to the PCF and the AMF within a notification message (e.g., Nudm _SDM notification notify).

Operation 7 - The PCF having received the UE expected behavior data from the UDM can know from the data that UTM authentication success/failure status (authorization status) of the UAS UE, UAV type, flight purpose (UAV mission), route, flight time, owner information, and/or operator information. Through this, the PCF may change mobility restriction of the UAS UE through an internal policy or a contract with the UTM operator in advance. As to the mobility restriction defined in 3GPP, a combination of radio access technology (RAT) restriction, forbidden area, service area restriction, and core network type restriction may be roughly utilized.

The RAT restriction prohibits access to PLMN using a specific RAT defined by 3GPP. The forbidden area prohibits all communication attempts to a specific PLMN within an area included in the forbidden area list. The service area restriction can be broadly divided into two types of areas such as service non-allowed area and service allowed area, which can be configured in the form of list for each area. General communication services can be used within the service allowed area, and within the service non-allowed area, the UE is not allowed to make a service request or SM signaling from the core network. Finally, the core network type restriction prohibits restrictions on a specific type of the core network, such as EPC or 5GC.

The PCF having receiving the UE expected behavior data from the UTM may generate a new mobility restriction-related policy with reference to the UE expected behavior data. For example, the PCF may temporarily change the list of the service forbidden areas or the service non-allowed areas when the specificity of the purpose such as fire suppression or long-term transport is accepted or through a contractual relationship with the UTM. At this time, in order to consider whether the corresponding service is allowed, the PCF may consider UTM authentication success/failure status (authorization status), UAV type, operation purpose (UAV mission), route, flight time, owner information, and/or operator information in a combination manner. Through this, in order for the UAV to achieve its purpose, specific mobility restriction is temporarily permitted to be released or changed during the corresponding operation. This permission may be performed for a specific period through a specific timer, or may be temporarily applied as permission during this registration period.

Operation 8 - The PCF transmits the newly generated mobility-related policy to the AMF currently supporting the UAS UE through Npcf_AMPolicyControl UpdateNotify.

Operation 9 - The AMF having received the new mobility-related policy from the PCF updates information related to access to the existing UE context and mobility as the received information. Additionally, the PCF may generate a new registration area of the UE based on the updated mobility-related policy. In the newly generated registration area, an area in which control signals can be optimized within the operating range of the UAV is calculated by utilizing the UE's route and flight time information provided in the previous step.

Operation 10 - In order to update the newly transmitted mobility-related policy and registration area in the UE, the AMF transmits, to the UE, the mobility restriction policy and registration area which are updated through a mobility-related UE configuration procedure defined by 3 GPP. If necessary, the UE can perform a new registration procedure. In this process, the AMF can transmit RAN support information (core network assisted ran parameters) related to the behavior of the UE. The RAN support information includes expected UE behavior, expected handover behavior, expected UE mobility (stationary or mobile), expected UE trajectory, and/or behavior information of the UE excluding the predicted UE route. Such information can be generated by the AMF by utilizing the UAS authorization data.

### [Third embodiment] - Method of transmitting UAS authentication data using service parameter service

In the current 3GPP, for a case in which additional UE configuration such as a vehicle or a UE supporting the vehicle is required to support vehicle to everything (V2X), or a case in which data provisioning to the UE is required, A procedure for an AF 407 to transmit service-related parameters to the UE is defined. The disclosure includes a method for transmitting information related to UAS authentication and operation and optimizing mobility restriction and mobility management information of the UE by using this procedure. As to the authentication between the UAS constituent device and the UTM, the operation of flight of the UAS is authenticated in consideration of a legitimate user, a correct route, a normal device status, the availability of flight, confirmation of the flight mission, and flight routes and/or schedules of other UAVs or other aircraft in relation to the operation of flight.

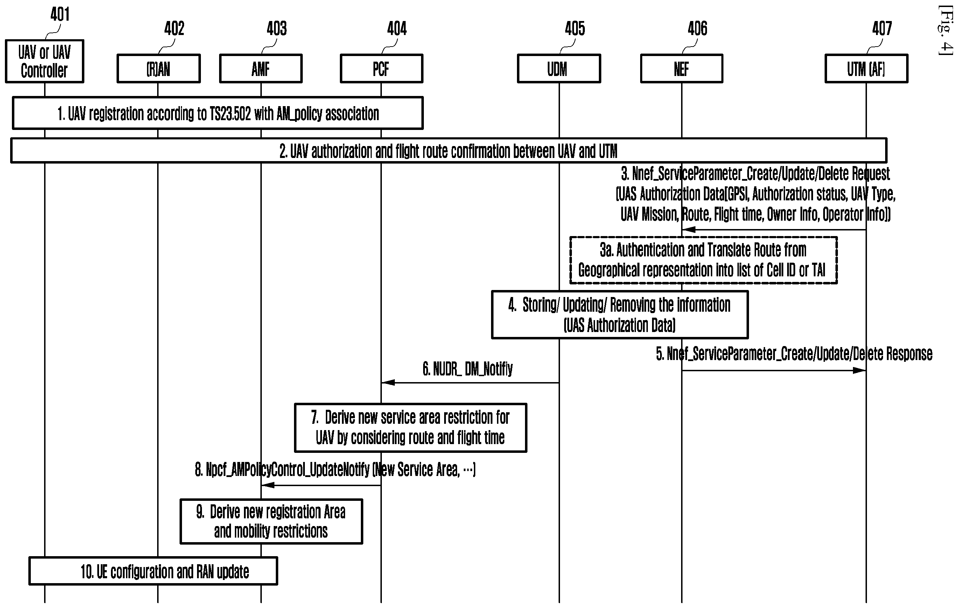

Hereinafter, a third embodiment will be exemplarily described with reference to FIG. 4.

FIG. 4 illustrates a method of transmitting UAS authentication data using service parameter service according to an embodiment of the disclosure.

Referring to FIG. 4, includes a method in which a UTM (AF) authenticates the operation of a UAS and UAS operation information obtained in this process is transmitted to a 3GPP core network to optimize the service restriction area and registration area of a UAS UE.

Operation 1 - In order to use the 3GPP mobile communication network, the UAV or UAV controller 401 transmits an initial registration request message to an AMF 403 in the same manner as a general UE. At this time, the initial behavior of the UE for transmission of the registration message, connection with a base station 402, and signal transmission procedures of the base station follow procedures defined in the 3GPP standard. Through the registration procedure, the UE is successfully registered in 3GPP mobile communication and receives information related to the use of the UE. In addition, it is possible to use procedures such as establishing a PDU session for data transmission through a user plane later and NAS transport for transmitting signals to the control plane. During the registration process, the AMF may establish AM policy association to obtain the UE's access and mobility-related policy from a PCF 404. Additionally, when the AMF determines that the UE is the UAS UE through the subscriber information of the UE, the AMF can establish AM policy association with the PCF. At this time, the PCF recognizes that there is transmission of service-related information through a UDM 405, which may occur in a later step, and makes an application for service-related information subscription (Nudr DM_Subscribe) to the UDM.

The status of the UE immediately after the registration is successfully completed is a status in which only the 3GPP registration procedure has been completed and authentication related to the operation of the UAV through a UTM 407 has not been completed. Accordingly, according to a mobile communication network operation policy or a service contract between a mobile communication operator and a UTM operator, the UE may not be able to communicate through an external data network.

Operation 2 - When the UE is successfully registered in the 3GPP system, the UE authenticates a UAV, a UAV controller, and a UAS constituting the UAV and the UAS controller through the UTM. In this process, each UE transmits information necessary for the above-described authentication to the UTM. Additionally, the core network can know that the corresponding UE can be composed of the UAS based on the subscriber information of the UAV and the UAV controller, and can know that additional authentication procedures with the UTM can occur. Through this, the core network may perform provisioning on a route through which control signals or data traffic occurring later in the UTM can be transmitted to the UTM. At this time, as to the data transmission between the UE and the UTM, as described above, 1) transmitting authentication data to the UTM as general data through a user plane by using a PDU session, 2) transmitting the authentication data through secondary DN authentication in a process of authenticating the PDU session, and 3) transmitting the authentication data through an NAS transport method via an NEF 406 by using the control plane may be used. At least one of the three methods may be supported in the disclosure. In the process of transmitting the authentication data of the UAS UE to the UTM through the above method, the 3 GPP core network can transmit, to the UTM, additional information such as identifier and location information used by 3GPP, such as IMEI, IMSI, and MSISDN, and a UE communication status (access radio communication technology or radio access capability) together with the UAS authentication data transmitted by the UE.

The UTM that has received the UAS authentication information from the UTM UE and the 3GPP core network may permit or deny the flight of the UAS in consideration of the received information, internal policy, current local situation, route, and the like. In the case of rejection, the UTM may transmit the cause of a rejection failure to the UE. For example, the UTM may recognize that the flight is not permitted on a specific route, and may transmit a flight rejection message indicating that the specific route includes a flight prohibition route of the UE. If the reason for the rejection is correctable by identifying the reason for the rejection, the UE can newly receive the authentication procedure by transmitting a new authentication message to the UTM through repetition of operation 2.

For the purpose of the UTM authentication, the UAV may transmit, for example, unique identify, UE capability of the UAV, manufacturer & model, serial number, take-off weight, position, owner identity, owner address, owner contact details, owner certification, take-off location and time, mission type, route data, and/or operating status.

For the purpose of the UTM authentication, the UAV controller may transmit unique identify, UE capability of the UAV controller, position, owner identify, owner address, owner contact details, owner certification, identity of a UAV operator who operates the UAV controller, and/or UAV operator license and certification.

When the 3GPP core network transmits the authentication information of the UAV or UAV controller to the UTM, international mobile subscriber identity (IMSI) which is the unique identifier of the UE used in the 3GPP, international mobile equipment identity (IMEI), mobile station international subscriber directory number (MSISDN), generic public subscription identifier (GPSI), and the like can be additionally transmitted to the UTM, which can be used to authenticate the UAS constituent devices.

Detailed authentication-related technologies and procedures may be outside the scope of the disclosure, but generally used authentication technologies may be applied.

Operation 3 - When the authentication of the UE constituting the UAS is successfully performed through the UTM, the UTM may inform the 3GPP core network of the authentication result through the NEF 206. At this time, the UTM may be the same as the AF, or may transmit authentication-related information through the NEF of 3GPP through an intermediate device that supports the AF. For example, the UTM may transmit information related to the UAS UE to the NEF by using Nnef_ParameterProvision Update Request provided by the NEF. Nnef_ServiceParameter operation depends on information of the currently provisioned UE. In a case of initially the information of the UAS-related UE, create may be used, in a case of changing the same, update may be used, and in a case of deleting the same, delete may be used. The transmitted authentication data may be contained in a data container named, for example, UAS authorization data and transmitted to the NEF through the UTM (AF). The UAS authorization data (UAS authorization data container) includes an external identifier of the UE (GPSI), UTM authentication success/failure status (authorization status), UAV type, operation purpose (UAV mission), route, flight time, owner information, and/or operator information, and this information may be transmitted to the NEF. In this process, if the UTM knows the IMSI, IMEI, and MSISDN of the UE, these may be transmitted as the identifier of the UE instead of the GPSI. In the disclosure, it has been described that the UAS authorization data container is used to store and transmit UAS authentication-related information. However, if the transmitted information is the same or similar, the same effect can be obtained by transmitting each piece of data to the NEF without using the container.

Optionally, if the authentication fails, there is no need to proceed with the subsequent process.

Operation 3a - Optional process. The NEF confirms that the data sent by the UTM is normal and is a message transmitted by the UTM with legitimate use and access rights. If it is confirmed that the message is normally transmitted by the UTM, the NEF converts information that needs to be converted into information used inside 3GPP among the transmitted authentication data into a form used inside the core network. For example, the GPSI can be converted into SUPI and IMSI used in the core network, and route information can be converted into a form of list of TAI. In addition, when the status is represented by an encoding method for concise expression of the information, conversion of such information may be performed. For example, if authorization status = "true", it can be converted into information in a form used by internal devices and objects such as authorization status= 1 for concise expression.

Operation 4 - The NEF stores the UTM authentication-related information transmitted in operation 3 in the UDR. When data is stored in the UDR, the UAS authorization data container can be stored directly, and each component inside each container can be stored as a separate field. If there is a field corresponding to the type of the subscriber information according to the manager's policy, the corresponding field of the subscriber information or UE context may be updated. Methods of directly storing the container, storing each data, and updating a specific field of the subscriber information may be selectively used, and may be all used simultaneously or in combination for reliability according to the policy. At the time of storage, the UDR can additionally store an AF ID of the UTM and transaction reference ID information to find the UTM that has transmitted the message separately from the UAS authorization data container. When the storage of requested information is completed, the UDR can transmit a notification that requested service parameter provision has been completed to the NEF.

Operation 5 - When receiving a response for provisioning from the UDR, the NEF may transmit a response to ServiceParameter to the UTM. For example, the NEF may use Nnef_ParameterProvision_Update Response provided by the NET to transmit a response to ServiceParameter to the UTM.

Operation 6 - When the UAS authorization data stored in operation 4 is updated with respect to the UAS UE, the UDR notifies NFs having subscribed to a data management-related event that the UAS authorization data is newly provisioned or changed. For example, the PCF having subscribed to the event in operation 1 may correspond to these NFs. Therefore, the PCF supporting the UAS UE can know that the UAS authorization data has been newly updated through a DM notification data event sent by the UDR, and the UAS authorization data is transmitted to the PCF within a notification message (e.g., Nudr _DM_notify).

Operation 7 - The PCF having received the UAS authorization data from the UDR can know from the data that UTM authentication success/failure status (authorization status) of the UAS UE, UAV type, flight purpose (UAV mission), route, flight time, owner information, and/or operator information. Through this, the PCF may change mobility restriction of the UAS UE through an internal policy or a contract with the UTM operator in advance. As to the mobility restriction defined in 3GPP, a combination of radio access technology (RAT) restriction, forbidden area, service area restriction, and core network type restriction may be roughly utilized.

The RAT restriction prohibits access to PLMN using a specific RAT defined by 3GPP. The forbidden area prohibits all communication attempts to a specific PLMN within an area included in the forbidden area list. The service area restriction can be broadly divided into two types of areas such as service non-allowed area and service allowed area, which can be configured in the form of list for each area. General communication services can be used within the service allowed area, and within the service non-allowed area, the UE is not allowed to make a service request or SM signaling from the core network. Finally, the core network type restriction prohibits restrictions on a specific type of the core network, such as EPC or 5GC.

The PCF having receiving the UAS authorization data from the UTM may generate a new mobility restriction-related policy with reference to the UAS authorization data. For example, the PCF may temporarily change the list of the service forbidden areas or the service non-allowed areas when the specificity of the purpose such as fire suppression or long-term transport is accepted or through a contractual relationship with the UTM. At this time, in order to consider whether the corresponding service is allowed, the PCF may consider UTM authentication success/failure status (authorization status), UAV type, operation purpose (UAV mission), route, flight time, owner information, and/or operator information in a combination manner. Through this, in order for the UAV to achieve its purpose, specific mobility restriction is temporarily permitted to be released or changed during the corresponding operation. This permission may be performed for a specific period through a specific timer, or may be temporarily applied as permission during this registration period.

Operation 8 - The PCF transmits the newly generated mobility-related policy to the AMF currently supporting the UAS UE through Npcf_AMPolicyControl UpdateNotify.

Operation 9 - The AMF having received the new mobility-related policy from the PCF updates information related to access to the existing UE context and mobility as the received information. Additionally, the PCF may generate a new registration area of the UE based on the updated mobility-related policy. In the newly generated registration area, an area in which control signals can be optimized within the operating range of the UAV is calculated by utilizing the UE's route and flight time information provided in the previous operation.

Operation 10 - In order to update the newly transmitted mobility-related policy and registration area in the UE, the AMF transmits, to the UE, the mobility restriction policy and registration area which are updated through a mobility-related UE configuration procedure defined by 3 GPP. If necessary, the UE can perform a new registration procedure. In this process, the AMF can transmit RAN support information (core network assisted ran parameters) related to the behavior of the UE. The RAN support information includes expected UE behavior, expected handover behavior, expected UE mobility (stationary or mobile), expected UE trajectory, and/or behavior information of the UE excluding the predicted UE route. Such information can be generated by the AMF by utilizing the UAS authorization data.

### [Fourth embodiment] - Method of correcting UTM authentication supporting core network

Since a UTM uses information collected by a UAS UE itself during a flight certification process, authentication is impossible in consideration of elements that affect the operation of the UAS UE by a mobile communication network. Representatively, communication services may be impossible outside a service coverage of the mobile communication network on the movement route of a UAV. In addition, the movement route of the UAV may be located on military areas, densely populated areas, service forbidden areas due to management policy, or communication non-allowed areas. In this case, the UTM must be able to correct the flight certification status, flight route, or flight time in consideration of the purpose and operational situation of the UAV.

In this embodiment, in a case in which the PCF receives data related to the authentication and operation of the UAV using the previous embodiments from the UTM, a warning is issued to the UTM when a place or time in which normal service is unavailable is included in the flight route of the UAV.

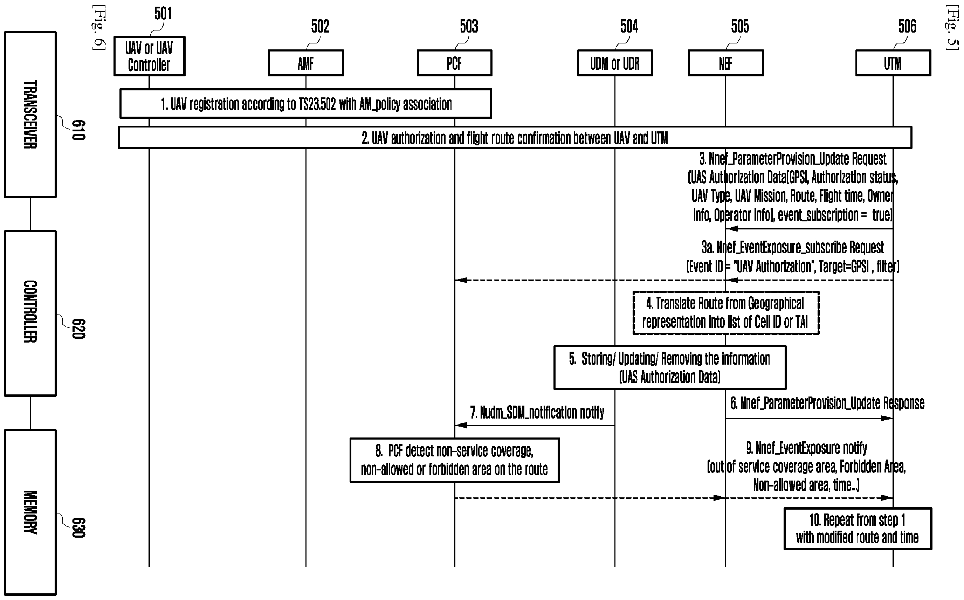

Hereinafter, a fourth embodiment will be exemplarily described with reference to FIG. 5.

FIG. 5 illustrates a method of correcting unmanned aerial vehicle traffic management (UTM) authentication supporting a core network according to an embodiment of the disclosure.

FIG. 5 includes a method of transmitting a warning to a UTM when the PCF includes a place and time in which normal services of a UAS UE are unavailable in a case in which the PCF transmits, to a 3GPP core network, UAS operating information obtained by the UTM (AF) during the authentication process.

Operation 1 - In order to use a 3GPP mobile communication network, a UAV or UAV controller 501 transmits an initial registration request message to an AMF 502 in the same manner as a general UE. At this time, the initial behavior of the UE for transmission of the registration message, connection with a base station, and signal transmission procedures of the base station follow procedures defined in the 3GPP standard. Through the registration procedure, the UE is successfully registered in 3GPP mobile communication and receives information related to the use of the UE. In addition, it is possible to use procedures such as establishing a PDU session for data transmission through a user plane later and NAS transport for transmitting signals to the control plane. During the registration process, the AMF may establish AM policy association to obtain the UE's access and mobility-related policy from a PCF 503. Additionally, when the AMF determines that the UE is the UAS UE through the subscriber information of the UE, the AMF can establish AM policy association with the PCF. At this time, the PCF applies for event-related subscription to a UDM 504 in order to receive a subscriber data management (SDM)-related event that may occur in later steps. During the registration process, the AMF can selectively apply to the UDM for SDM subscription to the UE in order to obtain the subscriber information of the UE from the UDM and to identify changes. If the AMF recognizes that the UE that currently transmits a registration request is the UAS UE, and if this is recognized during step of importing the SDM and subscription to the change in the SDM is not requested, the AMF can request the SDM subscription from the UDM to detect a change in the subscriber information.

The status of the UE immediately after the registration is successfully completed is a status in which only the 3GPP registration procedure has been completed and authentication related to the operation of the UAV through a UTM 506 has not been completed. Accordingly, according to a mobile communication network operation policy or a service contract between a mobile communication operator and a UTM operator, the UE may not be able to communicate through an external data network.

Operation 2 - When the UE is successfully registered in the 3GPP system, the UE authenticates a UAV, a UAV controller, and a UAS constituting the UAV and the UAS controller through the UTM. In this process, each UE transmits information necessary for the above-described authentication to the UTM. Additionally, the core network can know that the corresponding UE can be composed of the UAS based on the subscriber information of the UAV and the UAV controller, and can know that additional authentication procedures with the UTM can occur. Through this, the core network may perform provisioning on a route through which control signals or data traffic occurring later in the UTM can be transmitted to the UTM. At this time, as to the data transmission between the UE and the UTM, as described above, 1) transmitting authentication data to the UTM as general data through a user plane by using a PDU session, 2) transmitting the authentication data through secondary DN authentication in a process of authenticating the PDU session, and 3) transmitting the authentication data through an NAS transport method via an NEF by using the control plane may be used. At least one of the three methods may be supported in the disclosure. In the process of transmitting the authentication data of the UAS UE to the UTM through the above method, the 3GPP core network can transmit, to the UTM, additional information such as identifier and location information used by 3GPP, such as IMEI, IMSI, and MSISDN, and a UE communication status (access radio communication technology or radio access capability) together with the UAS authentication data transmitted by the UE.

The UTM that has received the UAS authentication information from the UTM UE and the 3GPP core network may permit or deny the flight of the UAS in consideration of the received information, internal policy, current local situation, route, and the like. In the case of rejection, the UTM may transmit the cause of a rejection failure to the UE. For example, the UTM may recognize that the flight is not permitted on a specific route, and may transmit a flight rejection message indicating that the specific route includes a flight prohibition route of the UE. If the reason for the rejection is correctable by identifying the reason for the rejection, the UE can newly receive the authentication procedure by transmitting a new authentication message to the UTM through repetition of operation 2.

For the purpose of the UTM authentication, the UAV may transmit, for example, unique identify, UE capability of the UAV, manufacturer & model, serial number, take-off weight, position, owner identity, owner address, owner contact details, owner certification, take-off location and time, mission type, route data, and/or operating status.

For the purpose of the UTM authentication, the UAV controller may transmit unique identify, UE capability of the UAV controller, position, owner identify, owner address, owner contact details, owner certification, identity of a UAV operator who operates the UAV controller, and/or UAV operator license and certification.

When the 3GPP core network transmits the authentication information of the UAV or UAV controller to the UTM, international mobile subscriber identity (IMSI) which is the unique identifier of the UE used in the 3GPP, international mobile equipment identity (IMEI), mobile station international subscriber directory number (MSISDN), generic public subscription identifier (GPSI), and the like can be additionally transmitted to the UTM, which can be used to authenticate the UAS constituent devices.

Detailed authentication-related technologies and procedures may be outside the scope of the disclosure, but generally used authentication technologies may be applied.

Operation 3 - When the authentication of the UE constituting the UAS is successfully performed through the UTM, the UTM may inform the 3GPP core network of the authentication result through an NEF 505. At this time, the UTM may be the same as the AF, or may transmit authentication-related information through the NEF of 3GPP through an intermediate device that supports the AF. For example, the UTM may transmit information related to the UAS UE to the NEF by using Nnef_ParameterProvision Update Request provided by the NEF. The transmitted authentication data may be contained in a data container named, for example, UAS authorization data and transmitted to the NEF through the UTM (AF). The UAS authorization data (UAS authorization data container) includes an external identifier of the UE (GPSI), UTM authentication success/failure status (authorization status), UAV type, operation purpose (UAV mission), route, flight time, owner information, and/or operator information, and this information may be transmitted to the NEF. In this process, if the UTM knows the IMSI, IMEI, and MSISDN of the UE, these may be transmitted as the identifier of the UE instead of the GPSI. In the disclosure, it has been described that the UAS authorization data container is used to store and transmit UAS authentication-related information. However, if the transmitted information is the same or similar, the same effect can be obtained by transmitting each piece of data to the NEF without using the container.

In the process of transmitting the UAS authorization data, the UTM can subscribe to an event to receive an event related to the verification result of the UAS authorization data by the PCF at the same time. In the process of explicitly receiving a PCF-related event through operation 3a below or transmitting a Nnef_ParameterProvision_Update message, a subscription request can be made using one field. Referring to FIG. 5, a new parameter called event _subscription is added to the Nnef_ParameterProvision Update request message, and the request is transmitted to the NEF. Thereafter, when an event related to the UAS authorization data occurs, the NEF transmits the related event to the UTM.

Optionally, if the authentication fails, there is no need to proceed with the subsequent process.

This embodiment schematically illustrates a method of transmitting the UAS authorization data using the Nnef_ParameterProvision _Update used in the first and second embodiments, but the same can be applied to Nnef_ServiceParameter Create/Update/Delete used in the third embodiment.

Operation 3a - Optional process. In this process, information related to UAS authentication and operation is transmitted to the PCF or the AMF, and based on information received by each NF, a subscription is requested to receive related events that may occur in the mobile communication network. The UTM transmits a UAS-related event information subscription request message to the NEF using Nnef_EventExposure_subscribe Request. At this time, the NEF and the PCF that generates an actual event may use "UAV authorization" as an event ID for processing the event, and may designate a target UAS UE. In this process, additional parameters related to event reporting and filter can be transmitted together. An "UAV authorization" event is an event that transmits an event related to the PCF or AMF in relation to the authentication and operation information of the UAS UE transmitted by the UTM. When the UAS flight routes include areas where service is unavailable, service forbidden areas, communication noonallowable areas, etc., or when the same service interruption is expected at a specific time in a specific area, the "UAV authorization" event is an event that the UAS UE transmits information indicating that communication services are unavailable in a specific route to the UTM for the purpose of warning.

The NEF having received the event subscription request can find the PCF that supports the UE and can subscribe to the related event.

Operation 4 - optional process. The NEF confirms that the data sent by the UTM is normal and is a message transmitted by the UTM with legitimate use and access rights. If it is confirmed that the message is normally transmitted by the UTM, the NEF converts information that needs to be converted into information used inside 3GPP among the transmitted authentication data into a form used inside the core network. For example, the GPSI can be converted into SUPI and IMSI used in the core network, and route information can be converted into a form of list of TAI. In addition, when the status is represented by an encoding method for concise expression of the information, conversion of such information may be performed. For example, if authorization status = "true", it can be converted into information in a form used by internal devices and objects such as authorization status= 1 for concise expression.

Operation 5 - The NET stores the UTM authentication-related information transmitted in operation 3 in the UDM. The UDM can internally store the authentication data in the UDR by using services provided by the UDR such as Nudr _DM_Query and Nudr DM_Update. When data is stored in the UDM, the UAS authorization data container can be stored directly, and each component inside each container can be stored as a separate field. If there is a field corresponding to the type of the subscriber information according to the manager's policy, the corresponding field of the subscriber information or UE context may be updated. Methods of directly storing the container, storing each data, and updating a specific field of the subscriber information may be selectively used, and may be all used simultaneously or in combination for reliability according to the policy. At the time of storage, the UDR can additionally store an AF ID of the UTM and transaction reference ID information to find the UTM that has transmitted a message separately from the UAS authorization data container. When the storage of the requested information is completed, the UDM can transmit a notification that requested service parameter provision has been completed to the NEF.

In this operation, it has been described that the UDM is used to store the UAS authorization data and to transmit a notification, but in the case of using the UDR as in the third embodiment, the same can be applied.

Operation 6 - When receiving a response for provisioning from the UDM or the UDR, the NEF may transmit a response to ParameterProvision or ServiceParameter to the UTM. For example, the NEF may use Nnef_ParameterProvision Update Response provided by the NET to transmit a response thereto to the UTM.

Operation 7 - The UDM or the UDR transmits the UAS authorization data stored in operation 4 to the PCF. For example, the UDM or the UDR may use Nudm _SDM _notification notify to transmit this data to the PCF.

Operation 8 - The PCF having received the UAS authorization data can know from the data that UTM authentication success/failure status (authorization status) of the UAS UE, UAV type, flight purpose (UAV mission), route, flight time, owner information, and/or operator information. Through this, the PCF may change mobility restriction of the UAS UE through an internal policy or a contract with the UTM operator in advance. As to the mobility restriction defined in 3GPP, a combination of RAT restriction, forbidden area, service area restriction, and core network type restriction may be roughly utilized. In this case, it is impossible to change the mobility restriction according to laws or policies, but the route of the UAV may include an area where service is unavailable. When the UAV enters such an area, an event related to that communication service may be unavailable is transmitted to the NEF. The event information may include both information related to an area where communication service is not supported and information related to the reason for which communication service is not supported. In addition, when communication service in a specific region is not possible in a specific time period, information related to the inability to support communication service may be expressed by a combination of the area and time.

Operation 9 - The PCF transmits an event related to the generated communication unavailable area to the NEF. For example, the PCF may transmit the event related to the generated communication unavailable area to the NET by using Nnef_EventExposure notify.

Operation 10 - Optional process. The UTM, which has received the information related to the area and time related to the area where communication is unavailable from the NEF, can cancel the certification of the operation of the UAV UE or change the corresponding route to a service connectable route through route correction in consideration of the characteristics of the UE and the purpose of operation thereof. In addition, in the case of a UAV that does not require continuous connectivity, the operation is possible without changing the existing route. If there is a change in the information related to authentication and operation, it is possible to confirm whether the corresponding route is configured as a route for supporting the service of the mobile communication network by repeating operation 1 and transmitting the changed data to the 3GPP core network. The core network can minimize control signals that may occur between the network and the UAV by optimizing mobility restrictions and registration areas using the first to third embodiments.

FIG. 6 illustrates the structure of a network entity according to an embodiment of the disclosure. The network entity of FIG. 6 may be, for example, any one of the entities of FIG. 1. For example, the entity may be one of a UAV, a UAV controller, a UE device (ME) that shares the UAV or service, a UAS composed of the UAV and the UAV controller, a base station supporting wireless communication, AMF, SMF, PCF, NWDAF, NEF, UDM, or UDR, UPF, unmanned aerial vehicle traffic control system (UTM), or OAM.

Referring to FIG. 6, the network entity may include a transceiver 610, a controller 620, and a storage unit 630. In the disclosure, the controller may be defined as a circuit, an application-specific integrated circuit, or at least one processor.

The transceiver 610 may transmit and receive signals to and from other network entities. The transceiver 610 may receive system information from, for example, a base station, and may receive a synchronization signal or a reference signal.

The controller 620 may control the overall operation of a network entity according to the embodiment proposed in the disclosure. For example, the controller 620 may control a signal flow between respective blocks to perform an operation according to the procedure described above with reference to FIGS. 2 to 5. For example, the controller 620 may control the operation proposed by the disclosure to generate a mobility restriction-related policy based on authentication information in the mobile communication system according to an embodiment.

The storage unit 630 may store at least one of information transmitted and received through the transceiver 610 and information generated through the controller 620. For example, the storage unit 630 may store authentication information required to generate the mobility restriction-related policy according to the above-described embodiment.

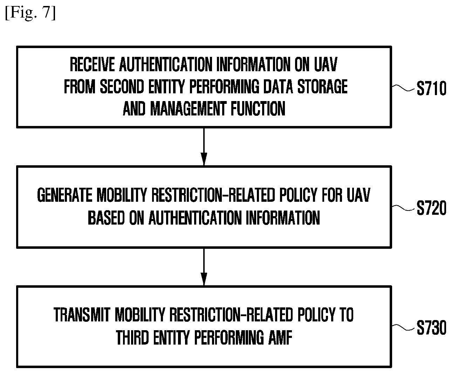

FIG. 7 illustrates a method of a first entity performing a policy control function (PCF) in a mobile communication system according to an embodiment of the disclosure. In FIG. 7, descriptions overlapping with those described above in the embodiments of FIGS. 2 to 4 are omitted.

Referring to FIG. 7, a first entity performing a PCF may receive authentication information on a UAV from a second entity performing a data storage or management function in operation S710. As an embodiment, the authentication information may be provided by a fourth entity (e.g., UTM) that performs unmanned aerial vehicle traffic management.

In operation S720, the first entity may generate a mobility restriction-related policy for the UAV based on the authentication information.

In operation S730, the first entity is a third entity that performs an access and mobility management function (AMF), and may transmit the mobility restriction-related policy.

As an embodiment, the mobility restriction-related policy may be used by the third entity to generate new registration area information for the UAV.

As an embodiment, the authentication information may include information on the purpose of operation of the UAV and information on the owner of the UAV.

As an embodiment, the authentication information may further include at least one of type information of the UAV, authentication state information of the UAV, route information of the UAV, flight time information of the UAV, or operator information of the UAV.

As an embodiment, the second entity may be an entity performing an integrated data management (UDM) function or an entity performing an integrated data storage (UDR) function.

As an embodiment, the authentication information may be provided by the fourth entity by using an authentication information container in a parameter provisioning update message.

As an embodiment, the authentication information may be provided by the fourth entity by using an expected UE behavior parameter in the parameter provisioning update message.

As an embodiment, the authentication information may be provided by the fourth entity by using the authentication information container in a service parameter message.

### [Fifth embodiment] - providing information on areas where communication is unavailable using PCF

A mobile communication system, such as a UAV and a UAV controller using a 5G mobile communication system, may undergo a registration process in the same manner as a UE using a general 3GPP mobile communication network, and may receive authentication and authorization related to the use of the mobile communication network. In this process, the core network supports UEs constituting the UAS to communicate with the UTM. Thereafter, the UTM performs authentication of the UAS UE, and at the same time, a UAS operator, an owner, flight route, and/or operational purpose may be comprehensively considered to give UE aviation authorization. In the disclosure, it is assumed that information exchange for authentication between the performed UAS and UTM is performed while the UE has been authenticated to the 3GPP network or currently being authenticated.

For the purpose of the UTM authentication, the UAV may transmit, to the UTM, unique identity, UE capability of the UAV, manufacturer & model, serial number, take-off weight, position, owner identify, owner address, owner contact details, owner certification, take-off location and time, flight purpose (mission type), route data, and/or operating status as the authentication information (data). In this case, the UAV may transmit the authentication information to the UTM through the 3 GPP core network.

For the purpose of the UTM authentication, the UAV controller may transmit, to the UTM, unique identify, UE capability of the UAV controller, position, owner identify, owner address, owner contact details, owner certification, identity of a UAV operator who operates the UAV controller, and/or UAV operator license and certification as the authentication information (data). In this case, the UAV controller may transmit the authentication information to the UTM through the 3 GPP core network.

When the 3GPP core network transmits the authentication information of the UAV or UAV controller to the UTM, international mobile subscriber identity (IMSI) which is the unique identifier of the UE used in the 3GPP, international mobile equipment identity (IMEI), mobile station international subscriber directory number (MSISDN), generic public subscription identifier (GPSI), and the like can be additionally transmitted to the UTM, which can be used to authenticate the UAS constituent devices.

The UTM performs authentication related to aviation authorization based on information transmitted by the UAS and directly collected information. However, since information which the UAS and the UTM possesses does not include information on the coverage (or status) and quality of the mobile communication network, a communication-related problem that may occur during the operation of the UAV cannot be considered. In order to solve this problem, the disclosure includes a method of calculating the route of a UAV by transmitting information related to network conditions and quality to the UTM in a core network. At this time, the transmitted network coverage (or status) and quality information may vary according to the flight purpose and flight altitude according to the operation condition of the UAV. Such information can be included as filter information in a message that the UTM requests information from the core network and may be transmitted, and the core network includes a method (or a function) of providing information on the network condition according to the requested area and time in consideration of such additional information.

The disclosure includes a method of performing the aviation authorization or operation route of the UE and a change in the time by using the information initially transmitted by the UAS for UTM authentication and aviation authorization, the network information transmitted by the 3GPP mobile communication network, and policies collected or configured by the UTM by itself.

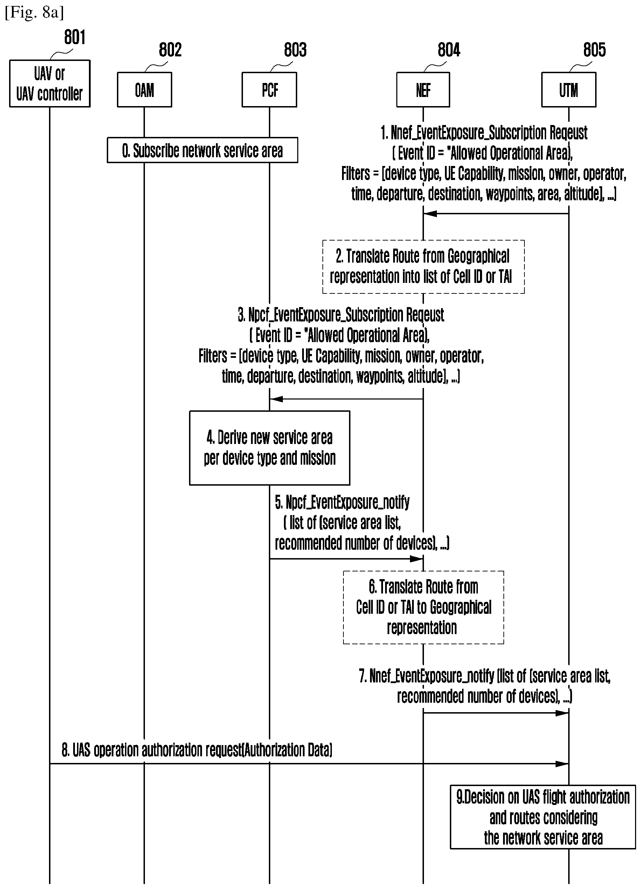

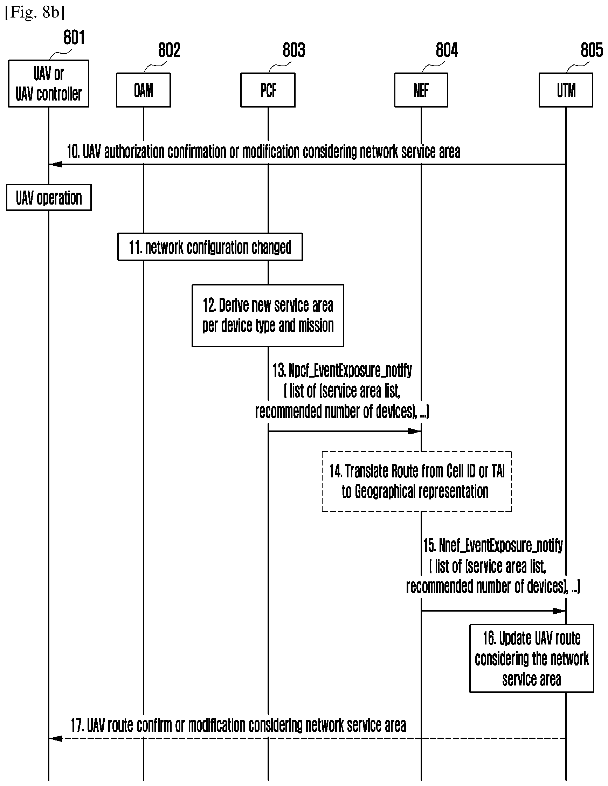

Hereinafter, a fifth embodiment will be exemplarily described with reference to FIGS. 8A and 8B.

FIGS. 8A and 8B shows a procedure for transmitting information on an allowed area or a non-allowed area of a UAV using a PCF. FIGS. 8A and 8B includes a method of permitting a final operation and a route of a UAS UE by using network-related information received from a core network in a process in which a UTM (AF) authenticates the operation of the UAS. At this time, a method of correcting the route or flight time according to the UTM's internal policy may be used.

Operation 0 - A PCF 803 may subscribe to or request information on the current mobile communication network from an OAM 802. The information received from the OAM includes at least one, for example, the location and service provision area of each base station, the provision area of the entire mobile communication network, whether each base station is currently operating, information on the base station operation including a measurement value for each base station and network service area. In addition, in relation to the core network, the operation status and load of each NF, the number of registered UEs for each area, and service status may be transmitted to the PCF. In addition, the PCF may receive information in advance about a policy or area that induces mobility restriction through the OAM or an internal method. The PCF may generate information related to mobility restriction of UEs in consideration of information received from the OAM and an internal policy.

As to the mobility restriction defined in 3GPP, a combination of RAT restriction, forbidden area, service area restriction, and core network type restriction may be roughly utilized. The RAT restriction prohibits access to a PLMN using a specific RAT defined by 3GPP. The forbidden area prohibits all communication attempts to a specific PLMN within an area included in the forbidden area list. The service area restriction can be broadly divided into two types of areas such as service non-allowed area and service allowed area, which can be configured in the form of list for each area. General communication services can be used within the service allowed area, and within the service non-allowed area, the UE is not allowed to make a service request or SM signaling from the core network. Finally, the core network type restriction prohibits restrictions on a specific type of the core network, such as EPC or 5GC.

Operation 1 - A UTM 805 may apply for an event subscription related to the current network service area to the core network through an NEF 804. The UTM is a device located outside the mobile communication network and can internally perform a role as an AF defined in 3GPP, or can transmit a request to the NEF through another device that plays the role of the AF.

A message (e.g., Nnef_EventExposure_Subscription request) in which the UTM transmits an event subscription request to the NEF may include an event identifier (Event ID) to be subscribed to, a filter, and/or values related to event reporting. In the disclosure, an event subscription for information related to status information of a network for each area is requested, and the event identifier requests subscription to an allowed area as the event identifier. The types of filters used for limited or more detailed information on the network status information on the allowed operational area may include device type, UE capability, flight mission, time, owner information, operator information, departure, destination, waypoints, altitude, and/or area, and the like. In this case, the UTM may limit an area where information is desired to be received according to the filter interest area and the type and purpose of the UAV. When the filter is not included, network conditions for the entire area where network services are provided can be provided according to the internal policy of the mobile communication network.

All of the parameters used in the filter are optional, and the filter can be configured with a combination of the respective parameters. The device type may include information related to the device configuration of the UAV, such as UAV type, UAV model, and UAV manufacturer. In the UE capability, it is possible to express wireless access technologies supported by the UAV and functions that can be supported by the core network. The flight mission indicates the purpose of the operation of the UAV, and may be expressed in a general string or in a predetermined category or code. The owner information and the operator information can be used for the purpose of confirming related contracts between a mobile communication operator and a UAV owner or operator in relation to the operation of a specific UAV. The departure, destination, and waypoints information may be used for the purpose of limiting an area including the departure, destination, and waypoints. If these pieces of information are not provided, the core network can provide the network condition for the entire service area. The altitude information indicates the main altitude at which each UE will fly, and is transmitted to consider network conditions that vary according to the altitude. Coordinate values for a specific area may be transmitted as area information. There may be various ways of expressing these coordinates, but the area can be expressed in various ways, such as a center value, a diameter, and a rectangular coordinate expressed by two points. Alternatively, the name of the area on the actual jurisdiction may be transmitted as area information.

Depending on the embodiment, for example, when the UTM is classified as a reliable AF, the UTM may apply for a subscription to an event related to the current network service area through the PCF directly without going through the NEF.

Operation 2 - The NEF can translate some or all of the information received from the UTM from a form of information used outside into a form of information used inside the network. For example, the NEF can convert methods of expressing areas using longitude and latitude used in GPS or expressing other local information into a tracking area ID (TAI) or a cell ID used inside the network. The function of the UE can also be converted into UE's radio capability and core network capability. If the related functions are expressed in a specific code, each such function can be converted into code and transmitted.

Operation 3 - The NEF requests a subscription request of the converted UTM from the PCF. To this end, the NEF may transmit a message (e.g., Npcf_EventExposure_Subscription request) for the converted event subscription request to the PCF. The type of the parameter transmitted through the message may be the same as the message transmitted by the UTM, and in the case of the converted parameter, the value may be different from the value of the parameter included in the message transmitted by the UTM.

Operation 4 - In order to process the event subscription request, the PCF calculates an area (e.g., service area per device type and flight mission) in which a UAV satisfying a corresponding condition can receive a communication service, based on the information transmitted from the OAM, the internal policy, and/or the content of the requested filter. As a result of the calculation, the area can be expressed as an allowed or non-allowed area. If the corresponding area is expressed as non-allowed area, information on the non-allowed reason can be expressed for each detailed area. For example, the causes of forbidden areas, densely populated areas, out of service coverage, and disability may be expressed. When the use is not possible due to a failure or temporary network configuration change, a detailed area and time zone in which communication service is not provided may be included in a message for a response or notification of the PCF to be described later in operation 5. For example, the detailed area and time zone may be included in the list of the allowed areas or the non-allowed areas in the message. For example, the list of the allowed areas includes detailed areas and operational time zones for the allowed areas. Alternatively, the list of the non-allowed areas includes detailed areas and non-operational time zones for the non-allowed areas. The information on the allowed areas or the non-allowed areas may be expressed as a set of the detailed areas. In addition, the detailed area can be expressed as TAI, cell ID, etc., used inside the mobile communication network. Additionally, there may be various methods for expressing information related to the areas, but the expression form of the information representing the areas may be included in a message for a response or notification of the PCF, which will be described later in operation 5. When the corresponding area is expressed as the allowed area, the recommended maximum number of UAVs may be included in the message for a response or notification of the PCF to be described later in operation 5.

Operation 5 - The PCF transmits the list of the allowed areas and the non-allowed areas to the NEF. To this end, the PCF may transmit a message (response or notification message {e.g., Npcf_EventExposure_notify}) for a response or notification with respect to the message of operation 3 (second request message) to the NEF. In this case, the message (the second notification message) may include a list of the allowed areas or the non-allowed areas (service area list). In addition, the second notification message may further include information indicating the number of devices recommended in the corresponding service area.

Operation 6 - The NEF converts information on the allowed or non-allowed areas transmitted to the PCF into information that can be known from the outside. On the other hand, when the corresponding information is provided without conversion, a case in which interpretation is possible by the UTM that receives mapping information on TAI or cell ID from the mobile communication network operator may be considered.

Operation 7 - The NEF transmits the converted information on the allowed areas or non-allowed areas to the UTM. To this end, the NEF may transmit a message (response or notification message {e.g., Npcf_EventExposure_notify}) for a response or notification with respect to the message (first request message) of operation 1 to the UTM. In this case, the message (first response message) may include the list of the allowed areas or the non-allowed areas (service area list). In addition, the first response message may further include information indicating the number of devices recommended in the corresponding service area.

Operation 8 - A UAV or a UAV controller 801 transmits information related to authentication and operation of the UAV to the UTM.

Operation 9 - The UTM determines whether to authenticate a UAS and permit flight based on information transmitted by the UAS, network condition information received from the aforementioned core network, information collected by itself, and/or policies. In this process, the UTM may determine whether the flight of the UAS is performed and the operating time and route through the process of correcting the route of the UAS in its own way. Alternatively, the UTM may determine the request route of the UAS as is as the UAS route.

Operation 10 - The UTM transmits authentication and flight authorization information to the UAS. The UAS performs normal operation according to the authentication result.

Operation 11 - When the network condition is changed, the OAM and/or the PCF may recognize a change in the network configuration. There may be various cases in which the network condition changes. For example, a change in the service provision area through temporary base station installation, a change in the provision area due to power off of the base station to save power, a change in a network protection area due to the movement of a UE, and occurrence of failures may act as causes of the changes in the network conditions.

Operation 12 - The PCF detects the change in the network condition and calculates information related to the allowed area or the non-allowed area of a new UAV (e.g., information on new device type and information on the service area for each operation purpose). The expression form of the information may be the same as in operation 4.

Operation 13 - The PCF transmits the newly calculated allowed or non-allowed area information to the NEF. To this end, the PCF may transmit the information to the NEF by using the message of operation 5. The message may further include information indicating the number of devices recommended in the new service area.

Operation 14 - The NET converts the information on the allowed or non-allowed area transmitted to the PCF into information that can be known from the outside. On the other hand, when the corresponding information is provided without conversion, a case in which interpretation is possible by the UTM that receives mapping information on TAI or cell ID from the mobile communication network operator may be considered.

Operation 15 - The NET transmits the converted information on the allowed areas or non-allowed areas to the UTM. To this end, the PCF may transmit the message to the NET by using the message of operation 7. The message may further include information indicating the number of devices recommended in a new service area.

Operation 16 - The UTM determines whether to authenticate the UTS, to permit flight, and to change the route and operation time based on information previously transmitted by the UAS, newly transmitted network condition information, information collected by itself, and/or policies.

Operation 17 - If it is necessary to cancel the authentication or to change information related to flight, the UTM notifies the UAS of information regarding the change.

Meanwhile, a process that occurs additionally according to the change in the network condition in the process after operation 11 may be selectively performed according to the policy, or may not be performed when event report related information is already satisfied in operation 1.

### [Sixth embodiment] - Providing local information that can satisfy communication quality requirements using NWDAF

When considering the characteristics of a UAV, correction of a route has characteristics different from that of a UE on the ground. There may be a case where the correction of a route to a destination is impossible due to battery and route constraints while flying. Therefore, in order to solve this problem, when initially configure the route of the UAV, it is necessary to select a route that satisfies communication quality requirements required by the UAV and to establish the route. In order to support this route configuration, the network provides information on an area that satisfies the quality requirements for each UE, and the UTM or the UAS can refer to this information to configure a route for moving areas at a level necessary for service use or provision.

In 3GPP, a network data analytics function (NWDAF), which is a function that provides analysis of network-related information through collection of network information, has been defined. In the existing NWDAF, as part of a method for supporting communication service for a vehicle, when the network service quality level of the UE is expected to drop below a certain level, a function of transmitting an event to a server or network function providing service has been defined. However, in the case of such an event, for a UAV, it may not be possible to correct the operation route when the network quality service is expected to drop or disconnect. Thus, the response of the service stage when the situation changes may cause a risk to the operation of the UAV. Therefore, in order to solve this problem, the UE must be able to utilize information on an area that can satisfy the required communication quality requirements when initially configuring the route.

The disclosure includes a method of providing information on an expected network quality level for a specific area and time by extending the functions provided by the NWDAF. The UTM or the UAS can use this information to configure the route of the UAV by utilizing information on an area before the operation of the UAV, network quality information over time, and information on an area where communication is impossible.

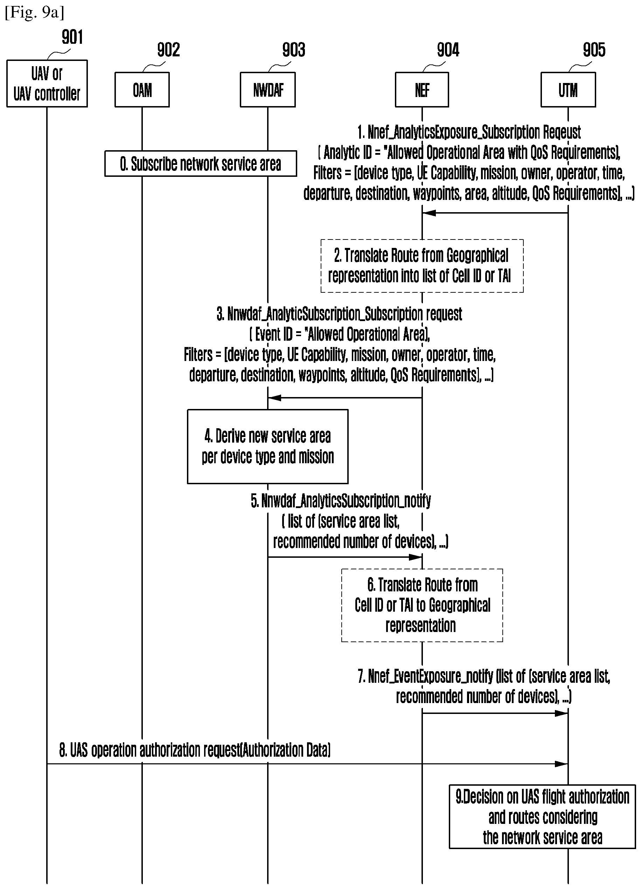

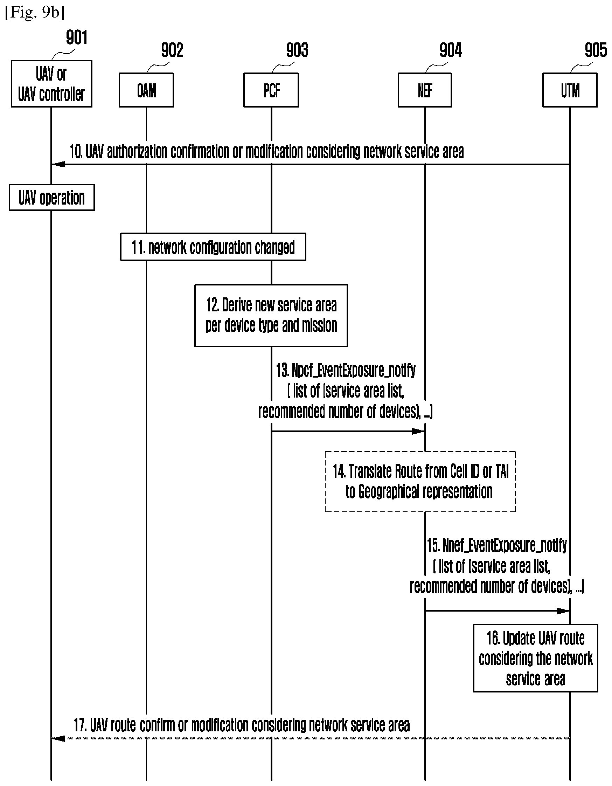

Hereinafter, a sixth embodiment will be exemplarily described with reference to FIG. 9.

FIGS. 9A and FIG. 9B show a procedure for transmitting information on an allowed area or a non-allowed area that satisfies the requested communication quality requirement using the NWDAF.

Operation 0 - A NWDAF 903 may subscribe to or request information on the current mobile communication network from an OAM 902. The information received from the OAM includes at least one, for example, the location and service provision area of each base station, the provision area of the entire mobile communication network, whether each base station is currently operating, information on the base station operation including a measurement value for each base station and network service area. In addition, in relation to the core network, the operation status and load of each NF, the number of registered UEs for each area, and service status may be transmitted to the NWDAF. In addition, the NWDAF may collect the information received from the OAM and information collected from an AMF, SMF, PCF, etc. The information collected by the NWDAF may include, for example, information such as the locations of specific UEs, mobility restrictions, PDU session status of the UE, communication status of the UE, user plane usage status of the UE, and/or service usage rate of the UEs. In addition, the NWDAF can collect information such as service quality and service experience from externally located servers such as an AF. The NWDAF may collect the above-described information with respect to, for example, UAS UEs that have previously operated (providing the UAS operation past record) and nearby UEs on the ground.

The NWDAF, which has collected information from the OAM, the NF, and the AF, collects records of such collected information, and may analyze whether a network failure that may occur in a specific area and a specific condition occurs, whether congestion occurs, and analysis and predicted information related to the communication quality through a method such as an internal algorithm or machine learning.

Operation 1 - A UTM 905 may apply for a subscription to network analysis information related to the current network service area to the core network through an NEF 904. The UTM is a device located outside a mobile communication network and may internally perform a role as an AF defined in 3GPP, or may transmit a request to an NEF through another device that plays the role of the AF.

A message (e.g., Nnef_AnalyticsExposure_Subscription) in which the UTM transmits a subscription request to the analysis information to the NEF may include an analytics ID to be subscribed to, a filter, and/or values related to analysis information report. In the disclosure, an event subscription to information related to status information of an area-specific network is requested, and the analytics ID requests a subscription to an allowed area with QoS requirements as the analytics ID. The types of the filters used for limited or more detailed information on the network status information on the allowed area may include device type, UE capability, flight mission, time, owner information, operator information, departure, destination, waypoints, altitude, and/or area, and the like. At this time, the UTM may additionally transmit information related to QoS requirements according to the UAV and the purpose of the flight of the UAV. Representative parameters for the QoS requirements may include bandwidth, delay, error rate, packet loss, peak transmission rate, and/or packet delay budget. In addition, the UTM may limit an area where information is desired to be received according to the filter interest area and the type and purpose of the UAV. If the filter is not included, network conditions for the entire area where network services are provided can be provided according to the internal policy of the mobile communication network.

All of the parameters used in the filter are optional, and the filter can be configured with a combination of the respective parameters. The device type may include information related to the device configuration of the UAV, such as UAV type, UAV model, and UAV manufacturer. In the UE capability, it is possible to express wireless access technologies supported by the UAV and functions that can be supported by the core network. The flight mission indicates the purpose of the operation of the UAV, and may be expressed in a general string or in a predetermined category or code. The owner information and the operator information can be used for the purpose of confirming related contracts between a mobile communication operator and a UAV owner or operator in relation to the operation of a specific UAV. The departure, destination, and waypoints information may be used for the purpose of limiting an area including the departure, destination, and waypoints. If these pieces of information are not provided, the core network can provide the network condition for the entire service area. The altitude information indicates the main altitude at which each UE will fly, and is transmitted to consider network conditions that vary according to the altitude. Coordinate values for a specific area may be transmitted as area information. There may be various ways of expressing these coordinates, but the area can be expressed in various ways, such as a center value, a diameter, and a rectangular coordinate expressed by two points. Alternatively, the name of the area on the actual jurisdiction may be transmitted as area information.

Depending on the embodiment, for example, when the UTM is classified as a reliable AF, the UTM may apply for a subscription to an event related to the current network service area through the NWDAF directly without going through the NEF.

Operation 2 - The NEF can translate some or all of the information received from the UTM from a form of information used outside into a form of information used inside the network. For example, the NEF can convert methods of expressing areas using longitude and latitude used in GPS or expressing other local information into a tracking area ID (TAI) or a cell ID used inside the network. The function of the UE can also be converted into UE's radio capability and core network capability. If the related functions are expressed in a specific code, each such function can be converted into code and transmitted.

Operation 3 - The NEF transmits a subscription request of the converted UTM to the NWDAF as an analysis request. To this end, the NEF may transmit a message (e.g., Nnwdaf_AnalyticsSubscription request) for the converted subscription request to the NWDAF. The type of the parameter transmitted through the message may be the same as the message transmitted by the UTM, and in the case of the converted parameter, the value may be different from the value of the parameter included in the message transmitted by the UTM.

Operation 4 - In order to process the analysis information subscription request, the NWDAF calculates an area (e.g., service area per device type and flight mission, satisfying the requested communication service requirements) in which a UAV satisfying the requested network quality condition can receive a communication service, based on the information transmitted from the OAM, the internal policy, the requested filter, and/or past and present information collected from the AF/NF. As a result of the calculation, the area can be expressed as an allowed or non-allowed area. At this time, if information related to mobility restriction is collected from the PCF, the non-allowed area may be determined in consideration of whether mobility is restricted. If the corresponding area is expressed as the non-allowed area, information on the non-allowed reason can be expressed for each detailed area. For example, the causes of forbidden areas, densely populated areas, out of service coverage, causes of disability, and inability to satisfy quality requirements may be expressed. When the corresponding service is not provided or the quality is not satisfied due to a failure or temporary network configuration change, a detailed area and time zone in which communication service is not provided may be included in a message for a response or notification of the PCF to be described later in operation 5. For example, the detailed area and time zone may be included in the list of the allowed areas or the non-allowed areas in the message. For example, the list of the allowed areas includes detailed areas and operational time zones for the allowed areas. Alternatively, the list of the non-allowed areas includes detailed areas and non-operational time zones for the non-allowed areas. The information on the allowed areas or the non-allowed areas may be expressed as a set of the detailed areas. In addition, the detailed area can be expressed as TAI, cell ID, etc., used inside the mobile communication network. Additionally, there may be various methods for expressing information related to the areas, but the expression form of the information representing the areas may be included in a message for a response or notification of the PCF, which will be described later in operation 5. When the corresponding area is expressed as the allowed area, the recommended maximum number of UAVs may be included in the message for a response or notification of the PCF to be described later in operation 5.

Operation 5 - The NWDAF transmits the list of the allowed areas and the non-allowed areas which satisfy the requested communication service requirements to the NEF. To this end, the NWDAF may transmit a message (response or notification message {e.g., Nnwdaf_AnalyticsSubscription notify}) for a response or notification with respect to the message of operation 3 (second request message) to the NEF. In this case, the message (the second notification message) may include a list of the allowed areas or the non-allowed areas (service area list) satisfying the requested communication quality. In addition, the second notification message may further include information indicating the number of devices recommended in the corresponding service area.

Operation 6 - The NEF converts information on the allowed or non-allowed areas, which satisfies the network quality requirements, transmitted to the NWDAF into information that can be known from the outside. On the other hand, when the corresponding information is provided without conversion, a case in which interpretation is possible by the UTM that receives mapping information on TAI or cell ID from the mobile communication network operator may be considered.

Operation 7 - The NEF transmits the converted information on the allowed areas or non-allowed areas satisfying the quality requirements to the UTM. To this end, the NWDAF may transmit a message (response or notification message {e.g., Nnwdaf_AnalyticsExposure notify}) for a response or notification with respect to the message (first request message) of operation 1 to the NEF. In this case, the message (first response message) may include the list of the allowed areas or the non-allowed areas (service area list) that satisfy the converted quality requirements. In addition, the first response message may further include information indicating the number of devices recommended in the corresponding service area.

Operation 8 -A UAV or a UAV controller 901 transmits information related to authentication and operation of the UAV to the UTM.

Operation 9 - The UTM determines whether to authenticate a UAS and permit flight based on information transmitted by the UAS, network condition information received from the aforementioned core network, information collected by itself, and/or policies. In this process, the UTM may determine whether the flight of the UAS is performed and the operating time and route through the process of correcting the route of the UAS in its own way. Alternatively, the UTM may determine the request route of the UAS as is as the UAS route.

Operation 10 - The UTM transmits authentication and flight authorization information to the UAS. The UAS performs normal operation according to the authentication result.

Operation 11 - When the network condition is changed, the NWDAF may recognize a change in the network configuration. The recognition of this change can be analyzed by itself through continuous information collection from the OAM/AF/NF devices. There may be various cases in which the network condition changes. For example, a change in the service provision area through temporary base station installation, a change in the provision area due to power off of the base station to save power, a change in a network protection area due to the movement of a UE, and occurrence of failures may act as causes of the changes in the network conditions.

Operation 12 - The NWDAF detects the change in the network condition and calculates information related to the allowed area or the non-allowed area of a new UAV (e.g., information on new device type and information on the service area for each operation purpose). The expression form of the information may be the same as in operation 4.

Operation 13 - The NWDAF transmits the newly calculated allowed or non-allowed area information to the NEF. To this end, the NWDAF may transmit the information to the NEF by using the message of operation 5. The message may further include information indicating the number of devices recommended in the new service area. Operation 14 - The NET converts the information on the allowed or non-allowed area transmitted to the NWDAF into information that can be known from the outside. On the other hand, when the corresponding information is provided without conversion, a case in which interpretation is possible by the UTM that receives mapping information on TAI or cell ID from the mobile communication network operator may be considered.

Operation 15 - The NET transmits the converted information on the allowed areas or non-allowed areas to the UTM. To this end, the NEF may transmit the message to the UTM by using the message of operation 7. The message may further include information indicating the number of devices recommended in a new service area.

Operation 16 - The UTM determines whether to authenticate the UTS, to permit flight, and to change the route and operation time based on information previously transmitted by the UAS, newly transmitted network condition information, information collected by itself, and/or policies.

Operation 17 - If it is necessary to cancel the authentication or to change information related to flight, the UTM notifies the UAS of information regarding the change.

Meanwhile, a process that occurs additionally according to the change in the network condition in the process after operation 11 it may be selectively performed according to the policy, or may not be performed when event report related information is already satisfied in operation 1.

### [Seventh embodiment] - Providing location information that can satisfy communication quality requirements using PCF

Exposure and calculation of information related to mobility restriction of a UE is unique determination capability of a PCF, and can be determined by comprehensively considering a base station status, a core network status, internal policy, and the like. In this case, network failure condition for each area and time zone provided by the NWDAF and analysis information of communication quality level may act as a factor of determining the mobility restriction of the UE by the PCF, so that a decision related to the mobility restriction of the UAV or the UE can be finally made. In the disclosure, in order for the PCF to make a decision related to the mobility restriction of the UE more efficiently, the allowed area or the non-allowed area of the UAV may be calculated in consideration of network quality and condition information for each area and time zone provided by the NWDAF. The disclosure includes a method of determining the mobility restriction of the UE in consideration of the network analysis information provided by the NWDAF when the PCF receives an information request for the allowed area (or non-allowed area) of the UAV from the UTM or the UAS located outside.

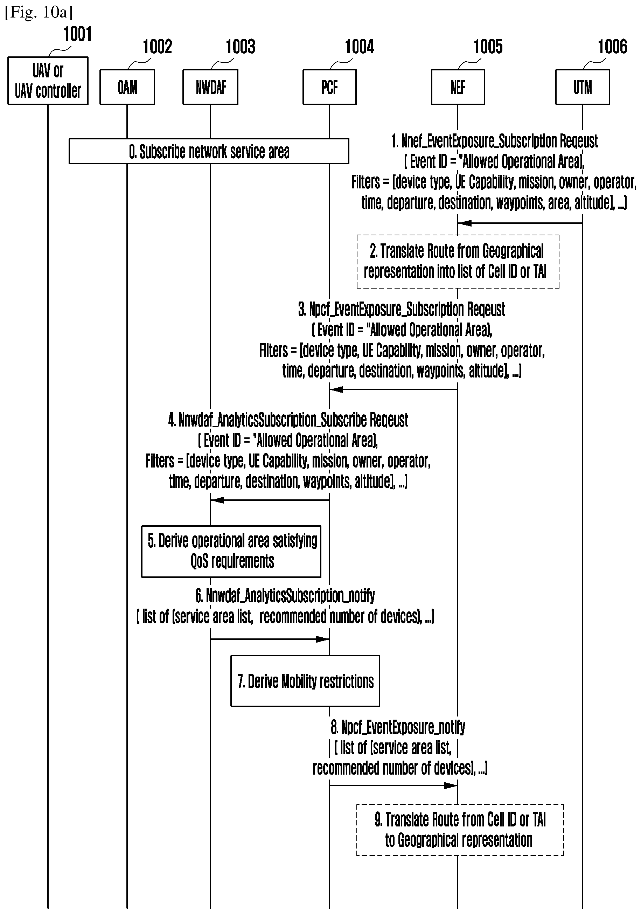

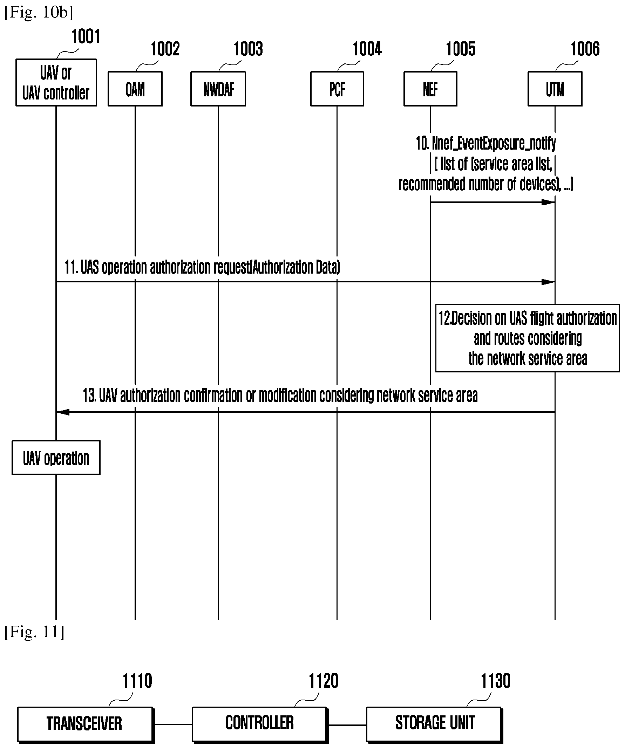

Hereinafter, a seventh embodiment will be exemplarily described with reference to FIGS. 10A and 10B.

FIGS. 10A and FIG. 10B show a procedure for transmitting information on an allowed area or a non-allowed area that satisfies the requested communication quality requirements using the PCF and the NWDAF.

Operation 0 - A PCF 1004 and an NWDAF 1003 may subscribe to or request information on the current mobile communication network from an OAM 1002. The information received from the OAM includes at least one, for example, the location and service provision area of each base station, the provision area of the entire mobile communication network, whether each base station is currently operating, information on the base station operation including a measurement value for each base station and network service area. In addition, in relation to the core network, the operation status and load of each NF, the number of registered UEs for each area, and service status may be transmitted to the PCF and the NWDAF. In addition, the PCF may receive information in advance about a policy or area that induces mobility restriction through the OAM or an internal method. The PCF may generate information related to mobility restriction of UEs in consideration of information received from the OAM and an internal policy.

As described above, as to the mobility restriction defined in 3GPP, a combination of RAT restriction, forbidden area, service area restriction, and core network type restriction may be roughly utilized. The RAT restriction prohibits access to a PLMN using a specific RAT defined by 3GPP. The forbidden area prohibits all communication attempts to a specific PLMN within an area included in the forbidden area list. The service area restriction can be broadly divided into two types of areas such as service non-allowed area and service allowed area, which can be configured in the form of list for each area. General communication services can be used within the service allowed area, and within the service non-allowed area, the UE is not allowed to make a service request or SM signaling from the core network. Finally, the core network type restriction prohibits restrictions on a specific type of the core network, such as EPC or 5GC.

As described above, the NWDAF may collect the information received from the OAM and information collected from an AMF, SMF, PCF, etc. The information collected by the NWDAF may include, for example, information such as the locations of specific UEs, mobility restrictions, PDU session status of the UE, communication status of the UE, user plane usage status of the UE, and/or service usage rate of the UEs. In addition, the NWDAF can collect information such as service quality and service experience from externally located servers such as an AF. The NWDAF may collect the above-described information with respect to, for example, UAS UEs that have previously operated (providing the UAS operation past record) and nearby UEs on the ground. The NWDAF, which has collected information from the OAM, the NF, and the AF, collects records of such collected information, and may analyze whether a network failure that may occur in a specific area and a specific condition occurs, whether congestion occurs, and analysis and predicted information related to the communication quality through a method such as an internal algorithm or machine learning.

Operation 1 - A UTM 1006 may apply for a subscription to network event information related to the current network service area to the core network through an NEF 1005. The UTM is a device located outside a mobile communication network and may internally perform a role as an AF defined in 3GPP, or may transmit a request to an NEF through another device that plays the role of the AF.

A message (e.g., Nnef_EventExposure_Subscription) in which the UTM transmits the event subscription request to the NEF may include an event ID to be subscribed to, a filter, and/or values related to event report. In the disclosure, an event subscription to information related to status information of an area-specific network is requested, and the event ID requests the subscription using an allowed area as the event ID. The types of the filters used for limited or more detailed information on the network status information on the allowed area may include device type, UE capability, flight mission, time, owner information, operator information, departure, destination, waypoints, altitude, and/or area, and the like. At this time, the UTM may additionally transmit information (QoS requirements) related to QoS requirements according to the UAV and the purpose of the flight of the UAV. Representative parameters for the QoS requirements may include bandwidth, delay, error rate, packet loss, peak transmission rate, and/or packet delay budget. In addition, the UTM may limit an area where information is desired to be received according to the filter interest area and the type and purpose of the UAV. If the filter is not included, network conditions for the entire area where network services are provided can be provided according to the internal policy of the mobile communication network.

All of the parameters used in the filter are optional, and the filter can be configured with a combination of the respective parameters. The device type may include information related to the device configuration of the UAV, such as UAV type, UAV model, and UAV manufacturer. In the UE capability, it is possible to express wireless access technologies supported by the UAV and functions that can be supported by the core network. The flight mission indicates the purpose of the operation of the UAV, and may be expressed in a general string or in a predetermined category or code. The owner information and the operator information can be used for the purpose of confirming related contracts between a mobile communication operator and a UAV owner or operator in relation to the operation of a specific UAV. The departure, destination, and waypoints information may be used for the purpose of limiting an area including the departure, destination, and waypoints. If these pieces of information are not provided, the core network can provide the network condition for the entire service area. The altitude information indicates the main altitude at which each UE will fly, and is transmitted to consider network conditions that vary according to the altitude. Coordinate values for a specific area may be transmitted as area information. There may be various ways of expressing these coordinates, but the area can be expressed in various ways, such as a center value, a diameter, and a rectangular coordinate expressed by two points. Alternatively, the name of the area on the actual jurisdiction may be transmitted as area information.

Depending on the embodiment, for example, when the UTM is classified as a reliable AF, the UTM may apply for a subscription to an event related to the current network service area through the PCF directly without going through the NEF.

Operation 2 - The NEF can change some or all of the information received from the UTM from a form of information used outside to a form of information used inside the network. For example, the NEF can convert methods of expressing areas using longitude and latitude used in GPS or expressing other local information into a tracking area ID (TAI) or a cell ID used inside the network. The function of the UE can also be converted into UE's radio capability and core network capability. If the related functions are expressed in a specific code, each such function can be converted into code and transmitted.

Operation 3 - The NEF transmits the converted subscription request of the UTM to the PCF as the event subscription request. To this end, the NEF may transmit a message (e.g., Npcf_EventExposure_Subscription request) for the converted event subscription request to the PCF. The type of the parameter transmitted through the message may be the same as the message transmitted by the UTM, and in the case of the converted parameter, the value may be different from the value of the parameter included in the message transmitted by the UTM.

Operation 4 - In order to confirm information on an area that satisfies the communication QoS requirements of the UAV or the requested UE, the PCF may transmit an analysis information subscription request to the NWDAF. To this end, the PCF may transmit a message (e.g., Nnwdaf_AnalyticsSubscription request) for this subscription request to the NWDAF. The type of the parameter transmitted through the message may be the same as the message transmitted by the UTM, and in the case of the converted parameter, the value may be different from the value of the parameter included in the message transmitted by the UTM.

Operation 5 - The NWDAF calculates an area (e.g., satisfying the requested communication service requirements, allowed area) in which a UAV satisfying a requested network quality condition can receive communication services, based on the information transmitted from the OAM to process the analysis information subscription request, the internal policy, the requested filter, and/or past and present information collected from the AF/NF. As the calculation result, the corresponding operating area can be expressed as the allowed area or the non-allowed area. When the corresponding service is not provided or the quality is not satisfied due to a failure or temporary network configuration change, a detailed area and time zone in which communication service is not provided may be included in a message for a response or notification of the PCF to be described later in operation 5. For example, the detailed area and time zone may be included in the list of the allowed areas or the non-allowed areas in the message. For example, the list of the allowed areas includes detailed areas and operational time zones for the allowed areas. Alternatively, the list of the non-allowed areas includes detailed areas and non-operational time zones for the non-allowed areas. The information on the allowed areas or the non-allowed areas may be expressed as a set of the detailed areas. In addition, the detailed area can be expressed as TAI, cell ID, etc., used inside the mobile communication network. Additionally, there may be various methods for expressing information related to the areas, but the expression form of the information representing the areas may be included in a message for a response or notification of the PCF, which will be described later in operation 5. When the corresponding area is expressed as the allowed area, the recommended maximum number of UAVs may be included in the message for a response or notification of the PCF to be described later in operation 5.

Operation 6 - The NWDAF transmits the analysis results on the allowed area and the non-allowed area satisfying the communication quality requirements to the PCF. To this end, the NWDAF may transmit a message (response or notification message {e.g., Nnwdaf_AnalyticsSubscription notify}) for a response or notification with respect to the message of operation 4 (third request message) to the PCF. In this case, the message (the third notification message) may include a list of the allowed areas or the non-allowed areas (service area list) satisfying the requested communication service requirements. In addition, the third notification message may further include information indicating the number of devices recommended in the corresponding service area.

Operation 7 - The PCF calculates an area (e.g., service area satisfying the requested communication service requirements) in which a UAV satisfying the corresponding condition can receive communication service, based on the information transmitted from the OAM and the NWDAF to process the event subscription request, the internal policy, and/or the content of the requested filter. As the calculation result, the corresponding service area can be expressed as the allowed area or the non-allowed area. When the service area is expressed as the non-allowed area, information on the non-allowed reason for each detailed area may be expressed. For example, the causes of forbidden areas, densely populated areas, out of service coverage, and disability may be expressed. When the use is impossible due to a failure or temporary network configuration change, a detailed area and time zone in which communication service is not provided may be included in a message for a response or notification of the PCF to be described later in operation 5. For example, the detailed area and time zone may be included in the list of the allowed areas or the non-allowed areas in the message. For example, the list of the allowed areas includes detailed areas and operational time zones for the allowed areas. Alternatively, the list of the non-allowed areas includes detailed areas and non-operational time zones for the non-allowed areas. The information on the allowed areas or the non-allowed areas may be expressed as a set of the detailed areas. In addition, the detailed area can be expressed as TAI, cell ID, etc., used inside the mobile communication network. Additionally, there may be various methods for expressing information related to the areas, but the expression form of the information representing the areas may be included in a message for a response or notification of the PCF, which will be described later in operation 5. When the corresponding area is expressed as the allowed area, the recommended maximum number of UAVs may be included in the message for a response or notification of the PCF to be described later in operation 5.

Operation 8 - The PCF transmits the list of the allowed area and the non-allowed area satisfying the requested communication service requirements to the NEF. To this end, the PCF may transmit a message (response or notification message {e.g., Npcf_EventExposure_notify}) for a response or notification with respect to the message of operation 3 (second request message) to the NEF. In this case, the message (the third notification message) may include a list of the allowed areas or the non-allowed areas (service area list). In addition, the second notification message may further include information indicating the number of devices recommended in the corresponding service area.

Operation 9 - The NEF converts information on the allowed or non-allowed areas transmitted to the PCF into information that can be known from the outside. On the other hand, when the corresponding information is provided without conversion, a case in which interpretation is possible by the UTM that receives mapping information on TAI or cell ID from the mobile communication network operator may be considered.

Operation 10 - The NEF transmits the converted information on the allowed areas or non-allowed areas satisfying the quality requirements to the UTM. To this end, the NEF may transmit a message (response or notification message {e.g., Npcf_EventExposure_notify) for a response or notification with respect to the message (first request message) of operation 1 to the NEF. In this case, the message (first response message) may include the list of the allowed areas or the non-allowed areas (service area list) that satisfy the converted quality requirements. In addition, the first response message may further include information indicating the number of devices recommended in the corresponding service area.

Operation 11 - The UAV or a UAV controller 1001 transmits information related to authentication and operation of the UAV to the UTM.

Operation 12 - The UTM determines whether to authenticate a UAS and permit flight based on information transmitted by the UAS, network condition information received from the aforementioned core network, information collected by itself, and/or policies. In this process, the UTM may determine whether the flight of the UAS is performed and the operating time and route through the process of correcting the route of the UAS in its own way. Alternatively, the UTM may determine the request route of the UAS as is as the UAS route.

Operation 13 - The UTM transmits authentication and flight authorization information to the UAS. The UAS performs normal operation according to the authentication result.

The processes after operation 13 may be the same as the processes after operation 11 of the first or second embodiment described above. This is a process that occurs additionally according to a change in the network condition, and may be selectively performed according to policy, or may not be performed when event report-related information is already satisfied in operation 1.

FIG. 11 shows the structure of a network entity according to an embodiment of the disclosure. The network entity of FIG. 11 may be, for example, any one of the entities of FIG. 1. For example, the entity may be one of a UAV, a UAV controller, a UE device (ME) that shares a UAV or service, a UAS composed of the UAV and the UAV controller, a base station supporting wireless communication, an AMF, an SMF, a PCF, an NWDAF, an NEF, a UDM, a UDR, a UDF, a UTM, or an OAM. The network entity shown in FIG. 11 is the network entity used to implement the first to seventh embodiments described above, and may be the same or different entity as or from the network entity shown in FIG. 6.

Referring to FIG. 11, the network entity may include a transceiver 1110, a controller 1120, and a storage unit 1130. In the disclosure, the controller may be defined as a circuit, an application-specific integrated circuit, or at least one processor.

The transceiver 1110 may transmit and receive signals to and from other network entities. The transceiver 1110 may receive system information from, for example, a base station, and may receive a synchronization signal or a reference signal.

The controller 1120 may control the overall operation of the network entity according to the embodiment proposed in the disclosure. For example, the controller 1120 may control a signal flow between blocks to perform an operation according to the above-described procedure with reference to FIGS. 8A to 10B. For example, the controller 1120 may control an operation proposed in the disclosure to provide service detection in a mobile communication system according to an embodiment.

The storage unit 1130 may store at least one of information transmitted and received through the transceiver 1110 and information generated through the controller 1120. For example, the storage unit 1130 may store information required for service detection according to the above-described embodiment.

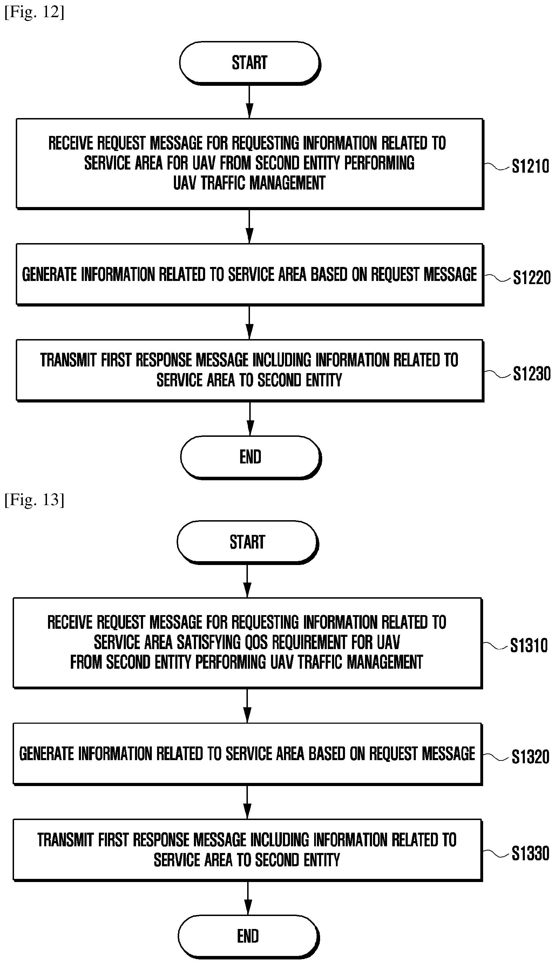

FIG. 12 shows a method of a first entity performing a policy control function (PCF) in a mobile communication system according to an embodiment of the disclosure. In FIG. 12, descriptions overlapping with those described above in the embodiments of FIGS. 8A to 10B are omitted.

Referring to FIG. 12, in operation S1210, the first entity performing the PCF may receive a request message for requesting information related to a service area for a UAV from a second entity performing UAV traffic management.

As an embodiment, the request message may include filter information used to generate information related to the service area, and the filter information may include device type information of the UAV and flight purpose information of the UAV.

As an embodiment, the filter information may further include information on quality of service (QoS) requirements for the UAV.

As an embodiment, the filter information may further include at least one of device performance information of the UAV, owner information of the UAV, operator information of the UAV, departure information of the UAV, destination information of the UAV, waypoints information of the UAV, time information related to the operation of the UAV, area information related to the operation of the UAV, or altitude information related to the operation of the UAV.

As an embodiment, the information related to the service area may include a list of an allowed area or a non-allowed area for the UAV.

As an embodiment, the information related to the service area may include a list of an allowed area or a non-allowed area for the UAV that satisfies the QoS requirements.

In operation S1220, the first entity may generate information related to the service area based on the request message.

In operation S 1230, the first entity may transmit a response message including the information related to the service area.

FIG. 13 shows a method of a first entity performing a network data analysis function (NWDAF) in a mobile communication system according to an embodiment of the disclosure. In FIG. 13, descriptions overlapping with those described above in the embodiments of FIGS. 9A to 10B are omitted.

Referring to FIG. 13, in operation S 1310, the first entity performing a PCF may receive a request message for requesting information related to a service area satisfying QoS requirements for a UAV from a second entity performing UAV traffic management.

As an embodiment, the request message may include filter information used to generate information related to the service area, and the filter information may include device type information of the UAV and flight purpose information of the UAV.

As an embodiment, the filter information may further include information on QoS requirements for the UAV.

As an embodiment, the filter information may further include at least one of device performance information of the UAV, owner information of the UAV, operator information of the UAV, departure information of the UAV, destination information of the UAV, waypoints information of the UAV, time information related to the operation of the UAV, area information related to the operation of the UAV, or altitude information related to the operation of the UAV.

As an embodiment, the information related to the service area may include a list of an allowed area or a non-allowed area for the UAV.

As an embodiment, the information related to the service area may include a list of an allowed area or a non-allowed area for the UAV that satisfies the QoS requirements.

In operation S 1320, the first entity may generate information related to the service area based on the request message.

In operation S 1330, the first entity may transmit a response message including the information related to the service area.

## Claims

1. A method performed by a policy control function, PCF, entity (803) for an unmanned aerial system, UAS, service in a wireless communication system, the method comprising:
receiving, from a server (804) for managing the UAS service, a request message (Fig. 8A step 3) for subscribing to an event notification associated with a network capability, the request message including information on a flight event;
identifying (Fig. 8A step 4) the network capability including information on mobility restriction based on the information on the flight event; and
transmitting (Fig. 8A step 5), to the server (804) for managing the UAS service, a notification message including the identified network capability;
the method **characterized in that**
the information on the mobility restriction includes information on a list of allowed service areas and information on a list of non-allowed service areas.

2. The method of claim 1, wherein the information on the flight event includes at least one of information on a device type, information on a flight time, information on a flight path, information on a flight purpose, or information on a flight altitude.

3. The method of claim 2, wherein the information on the flight path includes a departure, a destination, and waypoints.

4. The method of claim 2, wherein the information on the flight path translated into a list of cell IDs or tracking area IDs is delivered from a network exposure function, NEF, entity or is received from the server for managing the UAS service.

5. The method of claim 1, wherein the information on the mobility restriction further includes information indicating a number of devices recommended in the corresponding service area.

6. The method of claim 1, wherein the network capability further includes network coverage information.

7. The method of claim 6, wherein the network coverage information includes at least one of information on a network coverage status or information on a network quality.

8. A policy control function, PCF, entity (803) for an unmanned aerial system, UAS, service in a wireless communication system, the PCF entity comprising:
a transceiver (1110); and
at least one processor (1120) coupled with the transceiver (111) and configured to:
receive (Fig. 8A step 3), from a server (804) for managing the UAS service, a request message for subscribing to an event notification associated with a network capability, the request message including information on a flight event,
identify (Fig. 8A step 4) the network capability including information on mobility restriction based on the information on the flight event, and
transmit (Fig. 8A step 5), to the server (804) for managing the UAS service, a notification message including the identified network capability;
the PCF entity **characterized in that** the information on the mobility restriction includes information on a list of allowed service areas and information on a list of non-allowed service areas.

9. The PCF entity of claim 8, wherein the information on the flight event includes at least one of information on a device type, information on a flight time, information on a flight path, information on a flight purpose, or information on a flight altitude.

10. The PCF entity of claim 9, wherein the information on the flight path includes a departure, a destination, and waypoints.

11. The PCF entity of claim 9, wherein the information on the flight path translated into a list of cell IDs or tracking area IDs is delivered from a network exposure function, NEF, entity or is received from the server for managing the UAS service.

12. The PCF entity of claim 8, wherein the information on the mobility restriction further includes information indicating a number of devices recommended in the corresponding service area.

13. The PCF entity of claim 8, wherein the network capability further includes network coverage information.

14. The PCF entity of claim 13, wherein the network coverage information includes at least one of information on a network coverage status or information on a network quality.

## Patentansprüche

1. Verfahren, das von einer Richtlinienkontrollfunktions-, PCF,-Instanz (803), für ein unbemanntes Luftfahrtsystem, UAS, in einem drahtlosen Kommunikationssystem durchgeführt wird, wobei das Verfahren Folgendes umfasst:
Empfangen einer Anforderungsnachricht (FIG. 8A Schritt 3) von einem Server (804) zur Verwaltung des UAS-Dienstes, um eine Ereignisbenachrichtigung zu abonnieren, die mit einer Netzfähigkeit verbunden ist, wobei die Anforderungsnachricht Informationen über ein Flugereignis Folgendes enthält:
Identifizieren (FIG. 8A Schritt 4) der Netzfähigkeit, die Informationen über Mobilitätsbeschränkungen enthält, basierend auf den Informationen über das Flugereignis, und
Übertragen (FIG. 8A Schritt 5) einer Benachrichtigungsnachricht an den Server (804) für die Verwaltung des UAS-Dienstes, die die identifizierte Netzfähigkeit enthält;
wobei das Verfahren **dadurch gekennzeichnet ist, dass** die Informationen über die Mobilitätsbeschränkung Informationen über eine Liste von erlaubten Dienstbereichen und Informationen über eine Liste von nicht erlaubten Dienstbereichen enthalten.

2. Verfahren nach Anspruch 1, wobei die Informationen über das Flugereignis mindestens eine von Informationen über einen Vorrichtungstyp, Informationen über eine Flugzeit, Informationen über einen Flugweg, Informationen über einen Flugzweck oder Informationen über eine Flughöhe enthalten.

3. Verfahren nach Anspruch 2, wobei die Informationen über den Flugweg einen Abflug, ein Ziel und Wegpunkte enthalten.

4. Verfahren nach Anspruch 2, wobei die Informationen über den Flugweg, die in eine Liste von Zellen-IDs oder Verfolgungsbereichs-IDs umgewandelt werden, von einer Netzexpositionsfunktions-, NEF,-Instanz geliefert oder vom Server zur Verwaltung des UAS-Dienstes empfangen werden.

5. Verfahren nach Anspruch 1, wobei die Informationen über die Mobilitätseinschränkung ferner eine Information enthalten, die eine Anzahl von Vorrichtungen angibt, die in dem entsprechenden Dienstbereich empfohlen werden.

6. Verfahren nach Anspruch 1, wobei die Netzfähigkeit ferner Netzabdeckungsinformationen enthält.

7. Verfahren nach Anspruch 6, wobei die Netzabdeckungsinformationen mindestens eine von Informationen über einen Netzabdeckungsstatus oder Informationen über eine Netzqualität enthalten.

8. Richtlinienkontrollfunktions-, PCF,-Instanz (803 (803) für ein unbemanntes Luftfahrtsystem, UAS, in einem drahtlosen Kommunikationssystem, wobei die PCF-Instanz umfasst:
einen Transceiver (1110); und
mindestens einen Prozessor (1120), der mit dem Transceiver (111) gekoppelt ist und konfiguriert ist zum:
Empfangen (FIG. 8A Schritt 3), von einem Server (804) zur Verwaltung des UAS-Dienstes, einer Anforderungsnachricht zum Abonnieren einer Ereignisbenachrichtigung, die mit einer Netzfähigkeit verbunden ist, wobei die Anforderungsnachricht Informationen über ein Flugereignis enthält,
Identifizieren (FIG. 8A Schritt 4) der Netzfähigkeit, die Informationen über Mobilitätsbeschränkungen enthält, basierend auf den Informationen über das Flugereignis, und
Übertragen (FIG. 8A Schritt 5) einer Benachrichtigungsnachricht an den Server (804) für die Verwaltung des UAS-Dienstes, die die identifizierte Netzfähigkeit enthält;
wobei die PCF-Instanz **dadurch gekennzeichnet ist, dass** die Informationen über die Mobilitätsbeschränkung Informationen über eine Liste von erlaubten Dienstbereichen und Informationen über eine Liste von nicht erlaubten Dienstbereichen enthalten.

9. PCF-Instanz nach Anspruch 8, wobei die Informationen über das Flugereignis mindestens eine von Informationen über einen Vorrichtungstyp, Informationen über eine Flugzeit, Informationen über einen Flugweg, Informationen über einen Flugzweck oder Informationen über eine Flughöhe enthalten.

10. PCF-Instanz nach Anspruch 9, wobei die Informationen über den Flugweg einen Abflug, ein Ziel und Wegpunkte enthalten.

11. PCF-Instanz nach Anspruch 9, wobei die in eine Liste von Zellen-IDs oder Verfolgungsbereichs-IDs umgewandelten Informationen über den Flugweg von einer Netzexpositionsfunktions-, NEF,-Instanz geliefert oder von dem Server zur Verwaltung des UAS-Dienstes empfangen werden.

12. PCF-Instanz nach Anspruch 8, wobei die Informationen über die Mobilitätsbeschränkung ferner Informationen enthalten, die eine Anzahl von Vorrichtungen angeben, die in dem entsprechenden Dienstbereich empfohlen werden.

13. PCF-Instanz nach Anspruch 8, wobei die Netzfähigkeit ferner Netzabdeckungsinformationen enthält.

14. PCF-Instanz nach Anspruch 13, wobei die Netzabdeckungsinformationen mindestens eine von Informationen über einen Netzabdeckungsstatus oder Informationen über eine Netzqualität enthalten..

## Revendications

1. Procédé exécuté par une entité de fonction de commande de politique, PCF, (803) pour un système aérien sans pilote, UAS, dans un système de communication sans fil, le procédé comprenant :
recevoir, à partir d'un serveur (804) de gestion du service UAS, un message de demande (Fig. 8A étape 3) d'abonnement à une notification d'événement associée à une capacité de réseau, le message de demande comprenant des informations sur un événement de vol ;
identifier (Fig. 8A étape 4) la capacité de réseau comprenant des informations sur la restriction de mobilité sur la base des informations sur l'événement de vol ; et
transmettre (figure 8A, étape 5), au serveur (804) de gestion du service UAS, un message de notification comprenant la capacité de réseau identifiée ;
dans lequel le procédé est **caractérisée en ce que** les informations sur la restriction de mobilité comprennent des informations sur une liste de zones de service autorisées et des informations sur une liste de zones de service non autorisées.

2. Procédé de la revendication 1, dans lequel les informations sur l'événement de vol comprennent au moins l'une d'informations sur un type de dispositif, d'information sur un temps de vol, d'informations sur une trajectoire de vol, d'informations sur le but de vol ou d'informations sur l'altitude de vol.

3. Procédé de la revendication 2, dans lequel les informations sur la trajectoire de vol comprennent un départ, une destination et des points de passage.

4. Procédé de la revendication 2, dans lequel les informations sur la trajectoire de vol traduites en une liste d'ID de cellules ou d'ID de zones de suivi sont fournies par une entité de fonction d'exposition de réseau, NEF, ou reçues depuis le serveur de gestion du service UAS.

5. Procédé de la revendication 1, dans lequel les informations sur la restriction de mobilité comprennent en outre des informations indiquant un nombre de dispositifs recommandés dans la zone de service correspondante.

6. Procédé de la revendication 1, dans lequel la capacité de réseau comprend en outre des informations de couverture de réseau.

7. Procédé de la revendication 6, dans lequel les informations de couverture de réseau comprennent au moins l'une d'informations état de couverture de réseau ou d'informations de qualité de réseau.

8. Entité de fonction de commande de politique, PCF, (803) pour un service de système aérien sans pilote dans un système de communication sans fil, l'entité PCF comprenant :
un émetteur-récepteur (1110) ; et
au moins un processeur (1120), couplé à l'émetteur-récepteur (111) et configuré pour :
recevoir (figure 8A, étape 3), depuis un serveur (804) de gestion du service UAS, un message de demande d'abonnement à une notification d'événement associée à une capacité de réseau, le message de demande comprenant des informations sur un événement de vol,
identifier (Fig. 8A étape 4) la capacité de réseau comprenant des informations sur la restriction de mobilité sur la base des informations sur l'événement de vol ; et
transmettre (figure 8A, étape 5), au serveur (804) de gestion du service UAS, un message de notification comprenant la capacité de réseau identifiée ;
dans laquelle l'entité PCF est **caractérisée en ce que** les informations sur la restriction de mobilité comprennent des informations sur une liste de zones de service autorisées et des informations sur une liste de zones de service non autorisées.

9. Entité PCF de la revendication 8, dans laquelle les informations sur l'événement de vol comprennent au moins l'une d'informations sur un type de dispositif, d'information sur un temps de vol, d'informations sur une trajectoire de vol, d'informations sur le but de vol ou d'informations sur l'altitude de vol.

10. Entité PCF de la revendication 9, dans laquelle les informations sur la trajectoire de vol comprennent un départ, une destination et des points de passage.

11. Entité PCF de la revendication 9, dans laquelle les informations sur la trajectoire de vol traduites en une liste d'ID de cellules ou d'ID de zones de suivi sont fournies par une entité de fonction d'exposition de réseau, NEF, ou reçues depuis le serveur de gestion du service UAS.

12. Entité PCF de la revendication 8, dans laquelle les informations sur la restriction de mobilité comprennent en outre des informations indiquant un nombre de dispositifs recommandés dans la zone de service correspondante.

13. Entité PCF de la revendication 8, dans laquelle la capacité de réseau comprend en outre des informations de couverture de réseau.

14. Entité PCF de la revendication 13, dans laquelle les informations de couverture de réseau comprennent au moins l'une d'informations état de couverture de réseau ou d'informations de qualité de réseau.
